# EUROPEAN PATENT SPECIFICATION

(11) **EP 4 451 647 B1**
(45) Date of publication and mention of the grant of the patent: **11.11.2026**
(21) Application number: 23305609.2
(22) Date of filing: 19.04.2023
(51) Int. Cl.: H04L 67/131, H04L 67/14

(54) **DEVICE, SYSTEM AND METHOD FOR DISTRIBUTED PROCESSING USING A RENDERING PEER**
VORRICHTUNG, SYSTEM UND VERFAHREN ZUR VERTEILTEN VERARBEITUNG UNTER VERWENDUNG EINES RENDERING-PEER
DISPOSITIF, SYSTÈME ET PROCÉDÉ DE TRAITEMENT DISTRIBUÉ À L'AIDE D'UN HOMOLOGUE DE RENDU

(43) Date of publication of application: 23.10.2024
(73) Proprietor: Amadeus S.A.S., 06410 Biot (FR)
(72) Inventor: MOUYADE, Jean, 06370 Mouans Sartoux (FR); THIERY, Arnaud, 06160 Antibes (FR); NAIT OUSLIMANE, Sofiane, 06410 Biot (FR); PEROT, David, 06600 Antibes (FR)
(74) Representative: Samson & Partner Patentanwälte mbB

(56) References cited:
- WO-A1-2022/093237
- US-A1- 2020 346 109

## Description

### FIELD

The specification relates generally to distributed processing, and, in particular, to distributed processing using a rendering peer.

### BACKGROUND

Internet browsing began with the original hypertext markup language (HTML). HTML has iterated to its fifth version and continues to evolve. Elegant web browsing experiences are now commonplace, even on wireless mobile phones with small screens. With the correct equipment, augmented reality and virtual reality environments (commonly referred to as the metaverse), are on the cusp of providing even richer experiences than offered by traditional browsing. Standard Internet speeds now offer commonplace real time communication amongst large groups of people. At the same time, Internet content is increasing in volume and changing rapidly. Enormous unresolved challenges are present in efficiently utilizing computing, processing and communication resources. For example, not all devices have sufficient processing capability to adequately render augmented reality and virtual reality environments.

Solutions for such lacks of processing capabilities have been presented by US 2020/346109 A1, which controls rendering by allocating a cloud game client to a client device, which cannot render a video game instance with a quality above a threshold. WO 2022/093237 A1 similarly provides a remote game scheme manager to enable remote rendering in the cloud.

### SUMMARY

The subject-matter of the invention is defined by the independent claims. Additional aspects are defined by the dependent claims. General characteristics are summarized in the following.

A first aspect of the present specification provides a method comprising: establishing, via a server, a first communication link with a first client device and a second communication link with a second client device, the server configured to generate scene rendering data for a multi-user virtual platform, the first client device and the second client device configured to process respective scene rendering data to render respect scenes of the multi-user virtual platform; responsive to determining, via the server, that the second client device has higher processing capability than the first client device, selecting the second client device as a rendering peer for the first client device; establishing, via the server, communication between the first client device and the second client device; and transmitting, via the server, via the second communication link, to the second client device: first scene rendering data associated with the first client device; second scene rendering data associated with the second client device; and a command to control the second client device to: generate, as the rendering peer for the first client device, a first rendered scene from the first scene rendering data, and transmit the first rendered scene to the first client device for providing at the first client device; and generate a second rendered scene from the second scene rendering data, the second rendered scene for providing at the second client device.

At the method of the first aspect, establishing communication between the first client device and the second client device may comprise: transmitting, via the server, to one or more of the first client device and the second client device, connectivity information to establish a third communication link therebetween, such that communication between the first client device and the second client device occurs via the third communication link.

At the method of the first aspect, establishing communication between the first client device and the second client device may occurs via the server as an intermediary between the first client device and the second client device.

The method of the first aspect may further comprise, after communication between the first client device and the second client device is established: receiving, at the server, via the first communication link, from the first client device, respective virtual location data indicating one or more of a position and an orientation of a first virtual user in the multi-user virtual platform, the first virtual user associated with the first client device; updating, via the server, the first scene rendering data based on the respective virtual location data; and transmitting, via the server, via the second communication link, to the second client device, the first scene rendering data, as updated, to cause the second client device to generate, as the rendering peer for the first client device, an updated first rendered scene and transmit the updated first rendered scene to the first client device.

The method of the first aspect may further comprise, after communication between the first client device and the second client device is established: receiving, at the server, via the second communication link, from the second client device, respective virtual location data indicating one or more of a position and an orientation of a second virtual user in the multi-user virtual platform, the second virtual user associated with the second client device; and updating, via the server, the second scene rendering data based on the respective virtual location data; and transmitting, via the server, via the second communication link, to the second client device, the second scene rendering data, as updated, to cause the second client device to generate an updated second rendered scene for providing at the second client device.

The method of the first aspect may further comprise determining, via the server, that the second client device has higher processing capability than the first client device by: comparing respective processing capabilities of the first client device and the second client device, the respective processing capabilities comprising one or more of: respective numbers of images per second that each of the first client device and the second client device are capable of rendering; and respective speeds of respective processors of the first client device and the second client device.

The method of the first aspect may further comprise: comparing a respective processing capability of the second client device to a threshold processing capability; and responsive to determining that the respective processing capability of the second client device is higher than the threshold processing capability, proceeding with selecting the second client device as the rendering peer for the first client device; and responsive to determining that the respective processing capability of the second client device is less than the threshold processing capability, failing to proceed with selecting the second client device as the rendering peer for the first client device; and one or more of: transmitting the first scene rendering data to the first client device such that the first client device generates the first rendered scene; and transmitting the first scene rendering data to a cloud rendering device that generates the first rendered scene and provides the first rendered scene to the first client device.

The method of the first aspect may further comprise, prior to communication between the first client device and the second client device being established, one or more of: transmitting the first scene rendering data to the first client device such that the first client device generates the first rendered scene; and transmitting the first scene rendering data to a cloud rendering device that generates the first rendered scene and provides the first rendered scene to the first client device.

At the method of the first aspect, the first rendered scene and the second rendered scene have about a same resolution.

At the method of the first aspect, the first rendered scene and the second rendered scene may be at about a respective maximum resolution of respective visual rendering devices of the first client device and the second client device.

The method of the first aspect may further comprise partnering the first client device and the second client device with each other on a basis of one or more of: a difference in respective processing capabilities between the first client device and the second client device being above a threshold difference; similarities between the first rendered scene and the second rendered scene; a proximity of the first client device and the second client device; and stability of a third communication link established between the first client device and the second client device over which the first client device and the second client device communicate.

A second aspect of the specification provides a server comprising: a communication interface; and a controller configured to: establish, via the communication interface, a first communication link with a first client device and a second communication link with a second client device, the server configured to generate scene rendering data for a multi-user virtual platform, the first client device and the second client device configured to process respective scene rendering data to render respect scenes of the multi-user virtual platform; responsive to determining that the second client device has higher processing capability than the first client device, select the second client device as a rendering peer for the first client device; establish communication between the first client device and the second client device; and transmit, via the communication interface, via the second communication link, to the second client device: first scene rendering data associated with the first client device; second scene rendering data associated with the second client device; and a command to control the second client device to: generate, as the rendering peer for the first client device, a first rendered scene from the first scene rendering data, and transmit the first rendered scene to the first client device for providing at the first client device; and generate a second rendered scene from the second scene rendering data, the second rendered scene for providing at the second client device.

At the server of the second aspect, the controller may be further configured to establish communication between the first client device and the second client device by transmitting, via the communication interface, to one or more of the first client device and the second client device, connectivity information to establish a third communication link therebetween, such that communication between the first client device and the second client device occurs via the third communication link.

At the server of the second aspect, the controller may be further configured to establish communication between the first client device and the second client device using the server as an intermediary between the first client device and the second client device.

At the server of the second aspect, the controller may be further configured to, after communication between the first client device and the second client device is established: receive, via the first communication link, from the first client device, respective virtual location data indicating one or more of a position and an orientation of a first virtual user in the multi-user virtual platform, the first virtual user associated with the first client device; update the first scene rendering data based on the respective virtual location data; and transmit, via the second communication link, to the second client device, the first scene rendering data, as updated, to cause the second client device to generate, as the rendering peer for the first client device, an updated first rendered scene and transmit the updated first rendered scene to the first client device.

At the server of the second aspect, the controller may be further configured to, after communication between the first client device and the second client device is established: receive, via the second communication link, from the second client device, respective virtual location data indicating one or more of a position and an orientation of a second virtual user in the multi-user virtual platform, the second virtual user associated with the second client device; update the second scene rendering data based on the respective virtual location data; and transmit, via the second communication link, to the second client device, the second scene rendering data, as updated, to cause the second client device to generate an updated second rendered scene for providing at the second client device.

At the server of the second aspect, the controller may be further configured to determine, that the second client device has higher processing capability than the first client device by: comparing respective processing capabilities of the first client device and the second client device, the respective processing capabilities comprising one or more of: respective numbers of images per second that each of the first client device and the second client device are capable of rendering; and respective speeds of respective processors of the first client device and the second client device.

At the server of the second aspect, the controller may be further configured to: compare a respective processing capability of the second client device to a threshold processing capability; responsive to determining that the respective processing capability of the second client device is higher than the threshold processing capability, proceeding with selecting the second client device as the rendering peer for the first client device; and responsive to determining that the respective processing capability of the second client device is less than the threshold processing capability, failing to proceed with selecting the second client device as the rendering peer for the first client device; and one or more of: transmitting the first scene rendering data to the first client device such that the first client device generates the first rendered scene; and transmitting the first scene rendering data to a cloud rendering device that generates the first rendered scene and provides the first rendered scene to the first client device.

At the server of the second aspect, the controller may be further configured to, prior to communication between the first client device and the second client device being established, one or more of: transmit the first scene rendering data to the first client device such that the first client device generates the first rendered scene; and transmit the first scene rendering data to a cloud rendering device that generates the first rendered scene and provides the first rendered scene to the first client device.

At the server of the second aspect, the first rendered scene and the second rendered scene may have about a same resolution.

At the server of the second aspect the first rendered scene and the second rendered scene may be at about a respective maximum resolution of respective visual rendering devices of the first client device and the second client device.

At the server of the second aspect, the controller may be further configured to partner the first client device and the second client device with each other on a basis of one or more of: a difference in respective processing capabilities between the first client device and the second client device being above a threshold difference; similarities between the first rendered scene and the second rendered scene; a proximity of the first client device and the second client device; and stability of a third communication link established between the first client device and the second client device over which the first client device and the second client device communicate.

A third aspect of the specification provides a non-transitory computer-readable medium storing a computer program, wherein execution of the computer program is to implement a method comprising a method comprising: establishing, via a server, a first communication link with a first client device and a second communication link with a second client device, the server configured to generate scene rendering data for a multi-user virtual platform, the first client device and the second client device configured to process respective scene rendering data to render respect scenes of the multi-user virtual platform; responsive to determining, via the server, that the second client device has higher processing capability than the first client device, selecting the second client device as a rendering peer for the first client device; establishing, via the server, communication between the first client device and the second client device; and transmitting, via the server, via the second communication link, to the second client device: first scene rendering data associated with the first client device; second scene rendering data associated with the second client device; and a command to control the second client device to: generate, as the rendering peer for the first client device, a first rendered scene from the first scene rendering data, and transmit the first rendered scene to the first client device for providing at the first client device; and generate a second rendered scene from the second scene rendering data, the second rendered scene for providing at the second client device.

At the method of the third aspect, establishing communication between the first client device and the second client device may comprise: transmitting, via the server, to one or more of the first client device and the second client device, connectivity information to establish a third communication link therebetween, such that communication between the first client device and the second client device occurs via the third communication link.

At the method of the third aspect, establishing communication between the first client device and the second client device may occurs via the server as an intermediary between the first client device and the second client device.

The method of the third aspect may further comprise, after communication between the first client device and the second client device is established: receiving, at the server, via the first communication link, from the first client device, respective virtual location data indicating one or more of a position and an orientation of a first virtual user in the multi-user virtual platform, the first virtual user associated with the first client device; updating, via the server, the first scene rendering data based on the respective virtual location data; and transmitting, via the server, via the second communication link, to the second client device, the first scene rendering data, as updated, to cause the second client device to generate, as the rendering peer for the first client device, an updated first rendered scene and transmit the updated first rendered scene to the first client device.

The method of the third aspect may further comprise, after communication between the first client device and the second client device is established: receiving, at the server, via the second communication link, from the second client device, respective virtual location data indicating one or more of a position and an orientation of a second virtual user in the multi-user virtual platform, the second virtual user associated with the second client device; and updating, via the server, the second scene rendering data based on the respective virtual location data; and transmitting, via the server, via the second communication link, to the second client device, the second scene rendering data, as updated, to cause the second client device to generate an updated second rendered scene for providing at the second client device.

The method of the third aspect may further comprise determining, via the server, that the second client device has higher processing capability than the first client device by: comparing respective processing capabilities of the first client device and the second client device, the respective processing capabilities comprising one or more of: respective numbers of images per second that each of the first client device and the second client device are capable of rendering; and respective speeds of respective processors of the first client device and the second client device.

The method of the third aspect may further comprise: comparing a respective processing capability of the second client device to a threshold processing capability; and responsive to determining that the respective processing capability of the second client device is higher than the threshold processing capability, proceeding with selecting the second client device as the rendering peer for the first client device; and responsive to determining that the respective processing capability of the second client device is less than the threshold processing capability, failing to proceed with selecting the second client device as the rendering peer for the first client device; and one or more of: transmitting the first scene rendering data to the first client device such that the first client device generates the first rendered scene; and transmitting the first scene rendering data to a cloud rendering device that generates the first rendered scene and provides the first rendered scene to the first client device.

The method of the third aspect may further comprise, prior to communication between the first client device and the second client device being established, one or more of: transmitting the first scene rendering data to the first client device such that the first client device generates the first rendered scene; and transmitting the first scene rendering data to a cloud rendering device that generates the first rendered scene and provides the first rendered scene to the first client device.

At the method of the third aspect, the first rendered scene and the second rendered scene have about a same resolution.

At the method of the third aspect, the first rendered scene and the second rendered scene may be at about a respective maximum resolution of respective visual rendering devices of the first client device and the second client device.

The method of the third aspect may further comprise partnering the first client device and the second client device with each other on a basis of one or more of: a difference in respective processing capabilities between the first client device and the second client device being above a threshold difference; similarities between the first rendered scene and the second rendered scene; a proximity of the first client device and the second client device; and stability of a third communication link established between the first client device and the second client device over which the first client device and the second client device communicate.

A fourth aspect of the present specification provides a method comprising: receiving, at a client device, a command indicating the client device is a rendering peer for a further client device; receiving, at the client device, first scene rendering associated with the further client device and second scene rendering data associated with the client device; generating, at the client device, as the rendering peer for the further client device, a first rendered scene from the first scene rendering data; transmitting, from the client device to the further client device, the first rendered scene for providing at the further client device; generating, at the client device, a second rendered scene from the second scene rendering data; and providing, at the client device, the second rendered scene.

At the method of the fourth aspect, the command may include connectivity information which enables the client device to establish a third communication link with the further client device.

At the method of the fourth aspect, the command may further cause a rendering engine of the client device into a mode where the rendering engine is configured to generate rendered scenes for both the client device and the further client devices as output, based on respective scene rendering data for both the client device and the further client as input.

At the method of the fourth aspect, the second rendered scene may be provided at a visual rendering device.

A fifth aspect of the present specification provides a client device comprising: a communication interface and a controller configured to: receive, via the communication interface, a command indicating the client device is a rendering peer for a further client device; receive, via the communication interface, first scene rendering associated with the further client device and second scene rendering data associated with the client device; generate, as the rendering peer for the further client device, a first rendered scene from the first scene rendering data; transmit, via the communication interface, to the further client device, the first rendered scene for providing at the further client device; generate a second rendered scene from the second scene rendering data; and provide the second rendered scene.

At the client device of the fifth aspect, the command may include connectivity information which enables the client device to establish a third communication link with the further client device.

At the client device of the fifth aspect, the command may further cause a rendering engine of the client device into a mode where the rendering engine is configured to generate rendered scenes for both the client device and the further client devices as output, based on respective scene rendering data for both the client device and the further client as input.

At the client device of the fifth aspect, the second rendered scene may be provided at a visual rendering device.

A sixth aspect of the specification provides a non-transitory computer-readable medium storing a computer program, wherein execution of the computer program is to implement a method comprising a method comprising: receiving, at a client device, a command indicating the client device is a rendering peer for a further client device; receiving, at the client device, first scene rendering associated with the further client device and second scene rendering data associated with the client device; generating, at the client device, as the rendering peer for the further client device, a first rendered scene from the first scene rendering data; transmitting, from the client device to the further client device, the first rendered scene for providing at the further client device; generating, at the client device, a second rendered scene from the second scene rendering data; and providing, at the client device, the second rendered scene.

At the method of the sixth aspect, the command may include connectivity information which enables the client device to establish a third communication link with the further client device.

At the method of the sixth aspect, the command may further cause a rendering engine of the client device into a mode where the rendering engine is configured to generate rendered scenes for both the client device and the further client devices as output, based on respective scene rendering data for both the client device and the further client as input.

At the method of the sixth aspect, the second rendered scene may be provided at a visual rendering device.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for distributed processing using a rendering peer, according to non-limiting examples.
FIG. 2 depicts a server for distributed processing using a rendering peer, according to non-limiting examples.
FIG. 3 depicts a client device for distributed processing using a rendering peer, according to non-limiting examples.
FIG. 4 depicts a flowchart of a method for distributed processing using a rendering peer as implemented at a server, according to non-limiting examples.
FIG. 5 depicts a flowchart of a method for distributed processing using a rendering peer as implemented at a client device, according to non-limiting examples.
FIG. 6 depicts the system of FIG. 1 implementing aspects of methods for distributed processing using a rendering peer, according to non-limiting examples.
FIG. 7 depicts the system of FIG. 1 implementing further aspects of the methods for distributed processing using a rendering peer, according to non-limiting examples.

### DETAILED DESCRIPTION

Not all devices may have sufficient processing capability to adequately render scenes of a multi-user virtual platform which may include, but is not limited to, augmented reality and virtual reality environments. For example, a virtual reality headset may have minimal processing capability and may not be able to render scenes of a multi-user virtual platform in resolutions that are high enough to be considered truly immersive and/or to provide a true-to-life and/or photo-realistic immersive experience. Similarly, as virtual reality headsets age, their processing capability may not be adequate enough to keep up with rendering demands of developing multi-user virtual platform. While such processing of scenes may be performed via a cloud server, and the like, such cloud servers may not always be available.

Hence, provided herein is a method, device and/or server and system for distributed processing using a rendering peer. For example, a server that implements a multi-user virtual platform may establish respective communication links with a first client device and a second client device. The server may have further access to information indicative of respective processing capabilities of the first client device and the second client device, including, but not limited, respective processor speeds, numbers of images per second (e.g., a frame rate) at a given resolution that a client device may process, and the like. Such information may be stored at a memory available to the server and/or be received from the first client device and the second client device, for example during a registration process and/or when the first client device and the second client device log into the server and/or the multi-user virtual platform. The server, responsive to determining that the second client device has higher processing capability than the first client device, may select the second client device as a rendering peer for the first client device. As such, the server may transmit to the second client device: first scene rendering data associated with the first client device; and second scene rendering data associated with the second client device. The server may further transmit a command to control the second client device to generate, as the rendering peer for the first client device, a first rendered scene from the first scene rendering data, and transmit the first rendered scene to the first client device for providing at the first client device; and generate a second rendered scene from the second scene rendering data, the second rendered scene for providing at the second client device.

Put another way, as a rendering peer, the second client device renders scenes on behalf of the first client device, so that the first client device may take advantage of the higher processing capability of the second client device. The second client device transmits rendered scenes to the first client device, which may display such rendered scenes at a visual rendering device thereof.

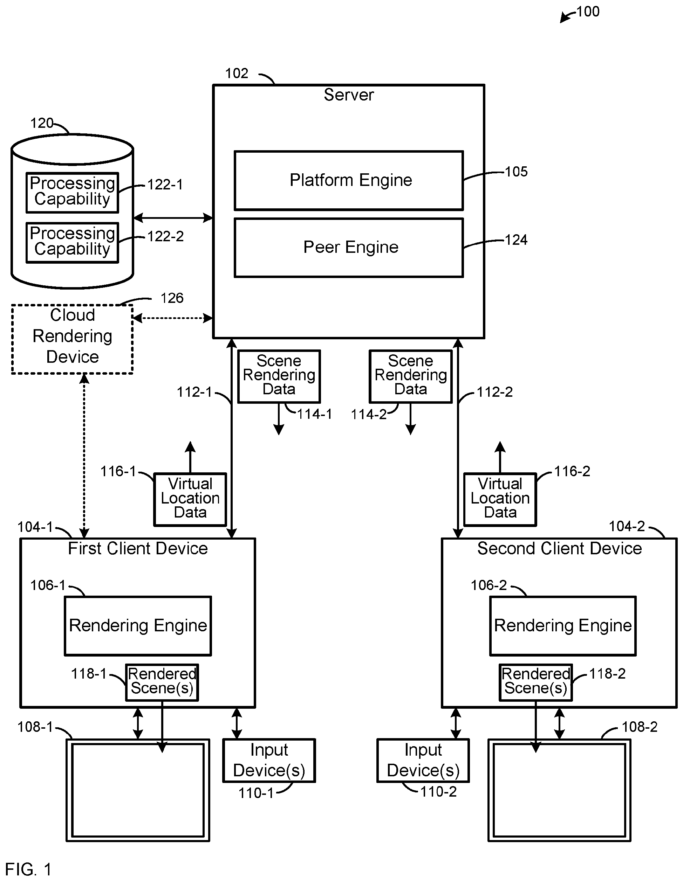

FIG. 1 depicts a system 100 for distributed processing using a rendering peer, which may mitigate and/or reduce at least a portion of the aforementioned technical challenges. The components of the system 100 are generally in communication via communication links which are depicted in FIG. 1, and throughout the present specification, as double-ended arrows between respective components. The communication links include any suitable combination of wireless and/or wired communication networks and, similarly, the communication links may include any suitable combination of wireless and/or wired links.

The system 100 will furthermore be described with respect to engines. As used herein, the term "engine" refers to hardware (e.g., a processor, such as a central processing unit (CPU), graphics processing unit (GPU), an integrated circuit or other circuitry) or a combination of hardware and software (e.g., programming such as machine- or processor-executable instructions, commands, or code such as firmware, a device driver, programming, object code, etc. as stored on hardware). Hardware includes a hardware element with no software elements such as an application specific integrated circuit (ASIC), a Field Programmable Gate Array (FPGA), a PAL (programmable array logic), a PLA (programmable logic array), a PLD (programmable logic device), etc. A combination of hardware and software includes software hosted at hardware (e.g., a software module that is stored at a processor-readable memory such as random access memory (RAM), a hard-disk or solid-state drive, resistive memory, or optical media such as a digital versatile disc (DVD), and/or implemented or interpreted by a processor), or hardware and software hosted at hardware.

In particular the system 100 comprises a server 102 and at least two client devices 104-1, 104-2. For simplicity, the at least two client devices 104-1, 104-2 are interchangeably referred to, herein, as the client devices 104 and, generically, as a client device 104. This convention will be used elsewhere in the present specification. While only two client devices 104 are depicted, the system 100 may comprise any suitable number of client devices 104, including tens, hundreds, thousands, and more, client devices 104. Furthermore, a number of client devices 104 of the system 100 may change as client devices 104 log into, and out of, a multi-user platform being implemented by the server 102, as described herein.

As depicted, the server 102 implements a platform engine 105. The platform engine 105 is generally configured to implement a multi-user virtual platform, including, but not limited to, an augmented reality platform and/or a virtual reality platform. Hence, a multi-user virtual platform is represented in FIG. 1 at least by way of the platform engine 105. Such a multi-user virtual platform may be based on any present or future interactive communication platforms such as a simple messaging service (SMS) interactive service, a browser-based e-commerce travel booking environment such as Travelocity^{™}, Expedia^{™} or any of the individual airline or hotel booking engines. Interactive communication platforms also include social media environments like Facebook^{™}, Tiktok^{™}, or even communication channels such as Whatsapp^{™}, or a massively multi-player environment such as Second Life^{™}, MineCraft^{™}, Fortnite^{™}, or a virtual reality 3D (three-dimensional) metaverse environment such as Roblox^{™} or Horizon Worlds^{™}. However, these examples are understood to be nonlimiting and purely illustrative. Other platforms and combinations thereof are contemplated. Regardless, as described herein, such platforms are understood to include a visual component which may show a visual space around which an operator of a client device 104 may navigate, for example using an avatar that represented the operator within the platform.

For example, via the platform engine 105, or any other suitable engine, the server 102 is configured to generate scene rendering data for a multi-user virtual platform. Such scene rendering data generally comprises data that a client device 104 may process to generate scenes in the multi-user virtual platform, that may be provided at a visual rendering device of a client device 104. For example, such scene rendering data may comprise data which may be rendered by a client device 104 into images to show scenes of the multi-user virtual platform at a visual rendering device of a client device 104.

As depicted, the client devices 104 comprise respective rendering engines 106-1, 106-2 (e.g., rendering engines 106 and/or a rendering engine 106, or a first rendering engine 106-1 and a second rendering engine 106-2) and are associated with respective visual rendering devices 108-1, 108-2 (e.g., visual rendering devices 108 and/or a visual rendering device 108, and/or a first visual rendering device 108-1 or a second visual rendering device 108-2) as well as respective one or more input devices 110-1, 110-2 (e.g., input devices 110 and/or an input device 110, and/or first input devices 110-1 or second input devices 110-2). A rendering engine 106 is configured to render scenes of the multi-user virtual platform into images that may be provided at a visual rendering device 108 of a client device 104, as will be described in more detail below. While the visual rendering devices 108 and the input devices 110 are depicted as components separate from the client devices 104, in some examples, a visual rendering device 108 and/or an input device 110 may be integrated into a client device 104.

In particular, a client device 104 may comprises any type of human machine interface (HMI) for interacting with a multi-user virtual platform. For example, a client device 104 may include virtual reality gear, augmented reality gear or mixed reality gear, such as headsets, tracking headsets, holographic devices, hand processors, full body sensors, haptic feedback, temperature feedback, smell feedback, treadmill or other foot tracking and feedback technology, and/or combinations of any of the foregoing. In addition, a client device 104 may include smart televisions, traditional laptop computers, desktop computers, mobile phones, tablet computers and any other device that can be used by users to receive content of a multi-user virtual platform, that complement the input and output hardware devices associated with a given client device 104. Such traditional client devices 104 may also have connected lights, light strips, speakers to provide a multi-media experience on such traditional client devices 104.

As such, the visual rendering devices 108 and the input devices 110 may have any suitable format, depending on a type of a client device 104. For example, a visual rendering device 108 may comprise a display screen, a projector, and the like, of headsets, holographic devices, and the like, and an input device 110 may comprise full body sensors, tracking headsets, a treadmill, a mouse and/or other pointing device, and the like.

While output devices such as haptic devices, speakers, and the like, are not depicted, a client device 104 may further include any suitable output devices, again depending on a type of a client device 104.

As depicted, the server 102 has established a first communication link 112-1 and a second communication link 112-2 (e.g., communication links 112 and/or a communication link 112), respectively, with the first client device 104-1 and the second client device 104-2, and is generating respective scene rendering data 114-1, 114-2 (e.g., scene rendering data 114 and/or a set of scene rendering data 114, and the like, and/or a first scene rendering data 114-1 and second scene rendering data 114-2) for the client devices 104-1, 104-2, for example based on virtual location data 116-1, 116-2 (e.g., virtual location data 116 and/or a set of virtual location data 116, and the like, and/or a first virtual location data 116-1 and second virtual location data 116-2) respectively provided to the server 102 by the first client device 104-1 and the second client device 104-2.

In particular, the communication links 112 may be established via respective client devices 104 logging into the multi-user virtual platform implemented by the server 102. The server 102 may generate the respective scene rendering data 114 based on the respective virtual location data 116 (e.g., of a respective avatar) associated with a respective client device 104 in the multi-user virtual platform.

In particular examples, it is understood that an operator of a client device 104 may operate respective input devices 110 to navigate the multi-user virtual platform via an avatar, and the like, and may, for example, move the avatar within the multi-user virtual platform, turn a head of the avatar, and/or operate the avatar to perform any suitable functionality within the multi-user virtual platform, which may include operating the avatar to move legs, wheels, arms, wings, tails, items, and/or any other suitable portion of the avatar and/or items held and/or operated by the avatar (e.g., such as tools, and the like). Hence, the virtual location data 116 may indicate a location and/or movement of the avatar within the multi-user virtual platform, as well as an orientation of the avatar and/or movement and/or positions of any suitable portions of the avatar, and/or items held and/or operated by the avatar.

The server 102 may receive the respective virtual location data 116 and update the scene rendering data 114 to show location and/or orientation of avatars in the multi-user virtual platform, so that the client devices 104 may show the locations and orientations of the avatars in scenes of the multi-user virtual platform.

However, the scene rendering data 114 may be updated based on any other suitable parameters of the multi-user virtual platform. For example, nonplayer characters, buildings, furniture, images, and/or any other suitable items, may be added or removed from the multi-user virtual platform, and/or may move within the multi-user virtual platform, and the scene rendering data 114 may be updated accordingly.

In particular examples, a rendering engine 106 may have access to platform rendering data (e.g., stored at a client device 104) that enables the rendering engine 106 to render scenes of the multi-user virtual platform for example to show rooms, landscapes, and the like of the multi-user virtual platform, and which may be augmented based on respective virtual location data 116 generated by a respective client device 104, and/or based on input data received via a respective input device 110, for example to show scenes of the multi-user virtual platform from a point of view of a respective avatar. For example, the scene rendering data 114 may indicate locations and orientations of other avatars in the multi-user virtual platform, as indicated by the virtual location data 116 received at the server 102, as well as any avatar rendering data for rendering the avatars. The client devices 104 may receive the scene rendering data 114, and use locally stored platform rendering data to render scenes of the platform augmented by the scene rendering data 114.

In other examples, the scene rendering data 114 may incorporate the aforementioned platform rendering data (e.g., stored at the server 102, and the like) that enables the rendering engine 106 to render scenes of the multi-user virtual platform based on respective virtual location data 116 generated by a respective client device 104, as well the aforementioned avatar rendering data. Put another way, in these examples, a client device 104 may render scenes of the multi-user virtual platform from the scene rendering data 114 which may already represent the multi-user virtual platform augmented based on respective virtual location data 116 at the server 102.

Regardless, the client devices 104, for example via respective rendering engines 106, respectively generate and provide respective rendered scenes 118-1, 118-2 (rendered scenes 118 and/or a rendered scene 118, and/or a first rendered scene (and/or scenes) 118-1 or a second rendered scene (and/or scenes) 118-2) to respective visual rendering devices 108, where the respective rendered scenes 118 are displayed. The rendered scenes 118 are updated at the visual rendering devices 108 when avatars move, and the like, as indicated by input from the input devices 110 and/or the scene rendering data 114 and/or the virtual location data 116.

Indeed, any suitable implementation of a multi-user platform is within the scope of the present specification, as well as any suitable implementation of scene rendering data 114 and virtual location data 116, as well as any suitable implementation of updating of scene rendering data 114 based on virtual location data 116. Regardless, it is understood that the rendering engines 106 process the scene rendering data 114 to generate respective scenes of the multi-user platform which are displayed at respective visual rendering devices 108.

However, in depicted examples, it is understood that the client devices 104 have different processing capabilities. For example, a processor of the first client device 104-1 may have a slower processing speed than a processor of the second client device 104-2. Such a difference in processing capability may cause scenes of the multi-user platform rendered by the first rendering engine 106-1 to be of lower resolution than respective scenes of the multi-user platform rendered by the second rendering engine 106-2. For example, it is understood that, in order for motion of avatars (e.g., and the like) in the multi-user platform to be viewed as continuous at a visual rendering device 108, images of the scenes may need to be generated at a client device 104 at a given minimum rate, such as 24 fps (frames per second), 60 fps, amongst other possibilities, though any given minimum rate is within the scope of the present specification. However, due to processing capabilities of a given client device 104, such a given client device 104 may only be enabled to generate images of a scene at such a given minimum rate at a resolution lower than resolutions required for an immersive experience.

For example, the first client device 104-1 may be capable of generating images at a given minimum frame rate of 24 fps at a resolution of 720p (e.g., 1280 x 720 pixels), while the second client device 104-2 may be capable of generating images at a given minimum frame rate of 24 fps at a resolution of 4K UHD (Ultra-high-definition) (e.g., 3840 x 2160 pixels). As such, scenes generated by the first client device 104-1 and/or the first rendering engine 106-1 may appear pixelated and/or cartoonish (e.g., not photo-realistic), while scenes generated by the second client device 104-2 and/or the second rendering engine 106-2 may appear photo-realistic.

Conversely, in such examples, the first client device 104-1 may only be capable of generating images at a resolution of 4K UHD of 5 fps, such that while scenes generated by the first client device 104-1 and/or the first rendering engine 106-1 may appear photorealistic, motion of avatars, and the like, may appear discontinuous, and hence non-immersive.

Furthermore, in some examples, the second client device 104-2 may include processing capabilities that enable the second client device 104-2 and/or the second rendering engine 106-2 to generate images well above the given minimum rate, or example, at least double the given minimum rate. In such examples, the server 102 may select the second client device 104-2 as a rendering peer for the first client device 104-1, establish communication therebetween, and control the second client device 104-2 to render scenes on behalf of the first client device 104-1 and further control the second client device 104-2 to transmit such rendered scenes to the first client device 104-1 for providing at the first client device 104-1, for example at the visual rendering device 108-1. The second client device 104-2 continues to render scenes for the second client device 104-2.

As depicted, the server 102 has access to a memory 120 which stores respective indications 122-1, 122-2 (indications 122 and/or an indication 122) of respective processing capabilities of the first client device 104-1 and the second client device 104-2. The memory 120 may comprise a database, and the like, and may be external and/or internal to the server 102.

The indications 122 may be populated when the client devices 104 register (e.g., register an account) with the server 102, however the indications 122 may be populated when the client devices 104 log into the server 102. In other examples, the indications 122 may not be stored at the memory 120, but may be received at the server 102 when the client devices 104 log into the server 102 and temporarily stored at an internal memory of the server 102.

Regardless, the indications 122 are understood to comprise numbers, and the like, and/or any other suitable indicators, which may be compared to each other, to determine whether client devices 104 have different processing capabilities and/or to determine whether one client device 104 has higher processing capability than another client device 104. In some examples, the indications 122 may comprise any suitable combination of one or more of respective processor speeds of the client devices 104, respective frame rates (e.g., maximum frame rates) at given resolutions that the client devices 104 are capable of generating, and the like. In some examples, the indications 122 may comprise respective numeric figures of merit that indicate respective processing capabilities of the client devices 104, for example that is any suitable combination of respective processor speeds, frame rates and/or maximum frame rates at given resolutions, and which may include, but is not limited to, respective available RAM, and the like.

The server 102 may compare the processing capabilities of the client devices 104 via a peer engine 124 configured to implement functionality as described herein including, but not limited to, selecting rendering peers for client devices 104, and providing commands to client devices 104 indicating that a client device 104 has been selected as a rendering peer for another client device 104.

In a particular example, the second client device 104-2 may have higher processing capabilities than the first client device 104-1, and hence the server 102, via implementation of the peer engine 124, may select the second client device 104-2 as a rendering peer for the first client device 104-1 and establish communication between the first client device 104-1 and the second client device 104-2, for example, via a third communication link therebetween and/or via the server 102.

In examples where the server 102 selects the second client device 104-2 as a rendering peer for the first client device 104-1, the server 102 transmits the first scene rendering data 114-1 and the second scene rendering data 114-2 to the second client device 104-2, for example via the second communication link 112-2, and the second client device 104-2 generates respective rendered scenes 118 for both the first client device 104-1 and the second client device 104,. The second client device 104-2 transmits the rendered scenes 118, for the first client device 104-1, to the first client device 104-1, and the rendered scenes 118 are provided at the first client device 104-1, for example at the visual rendering device 108-1. Hence, provided herein is a distributed processing scheme in which the second client device 104-2 generates respective rendered scenes 118 for both the first client device 104-1 and the second client device 104.

In some examples, as depicted, the system 100 may optionally comprise a cloud rendering device 126 which may, in some examples, initially process the scene rendering data 114-1 into the first rendered scenes 118-1 for the first client device 104-1, for example by receiving the scene rendering data 114-1 from the server 102 and providing the first rendered scenes 118-1 to the first client device 104-1. The cloud rendering device 126 may be a dedicated rendering device that may generate rendered scenes for a plurality of client devices 104, though such a cloud rendering device 126 may not always be available in the system 100, and furthermore adds cost and bandwidth requirements to the system 100. The optionality of the cloud rendering device 126 is indicated in FIG. 1 by way of the cloud rendering device 126 being drawn in dashed lines, as are communication links associated with the cloud rendering device 126.

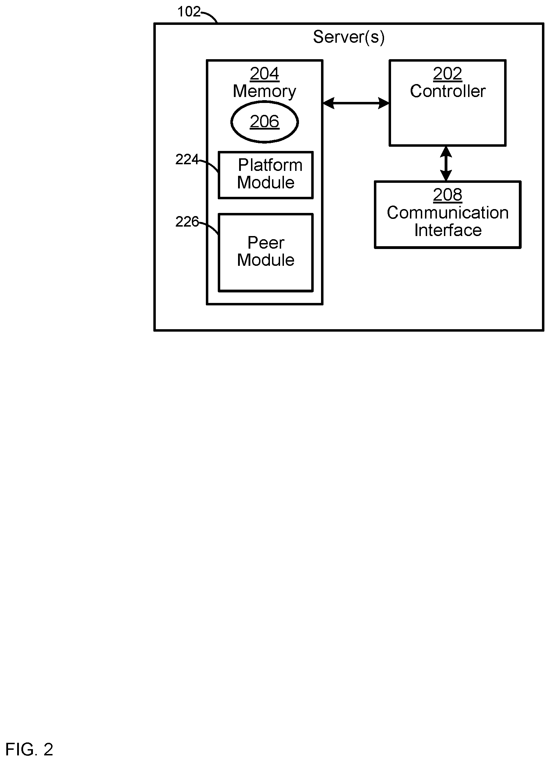

Attention is next directed to FIG. 2, in which certain example components of a server 102 are depicted. While depicted as one device, the server 102 may comprise one or more computing devices and/or one or more servers and/or one or more cloud computing devices that may be geographically distributed, and the like.

As shown in FIG. 2, the server 102 includes at least one controller 202, such as one or more central processing units (CPUs), and the like. The controller 202 is interconnected with a memory 204 storing an application 206, the memory 204 implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

The controller 202 is also interconnected with a communication interface 208, which enables the server 102 to communicate with the other components of the system 100, for example via any suitable communication network. The communication interface 208 therefore may include any suitable components (e.g., network interface controllers (NICs), radio units, and the like) to communicate via a network. The specific components of the communication interface 208 may be selected based upon the nature of a network used to communicate, and the like.

While not depicted in FIG. 2, the server 102 can also include input and output devices connected to the controller 202, such as keyboards, mice, visual rendering devices, and the like, and/or input and output devices compatible with a multi-user virtual platform implemented by the server 102.

The components of the server 102 mentioned above can be deployed in a single enclosure, or in a distributed format. In some examples, therefore, the server 102 may include a plurality of processors, either sharing the memory 204 and communication interface 208, or each having distinct associated memories and communication interfaces. As such, it is understood that the memory 204, and/or a portion of the memory 204, may be internal (e.g., as depicted) or external to the server 102; regardless, the controller 202 is understood to have access to the memory 204.

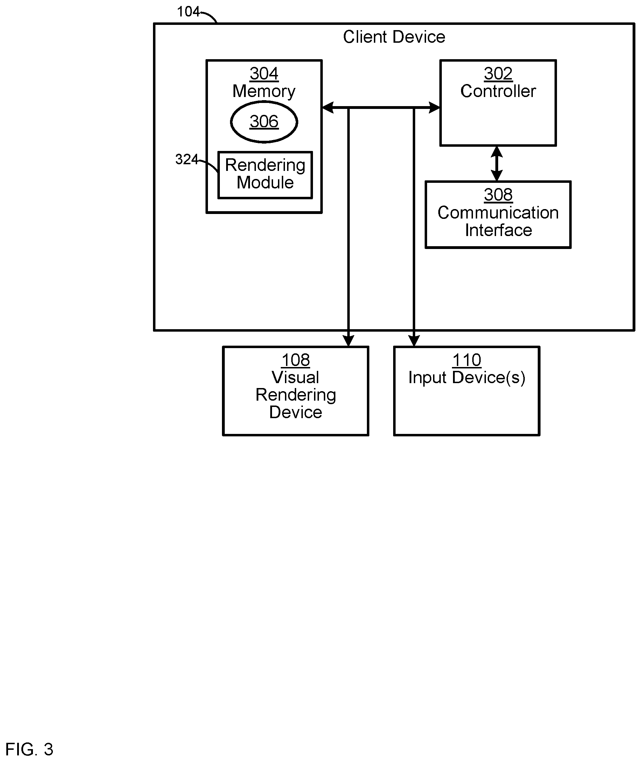

The memory 204 also stores computer-readable programming instructions, executable by the controller 202, in the form of various applications, including the application 206. As will be understood by those skilled in the art, the controller 202 executes the instructions of the application 206 (and any other suitable applications) in order to perform various actions defined by the instructions contained therein including, but not limited to, the blocks of a method described with respect to FIG. 3. In the description below, the controller 202, and more generally the server 102, are said to be configured to perform those actions. It will be understood that they are so configured via the execution (by the controller 202) of the instructions of the applications stored in memory 204.

As depicted, the memory 204 further stores a platform module 224 which comprises computer-readable programming instructions for implementing the platform engine 105, for example when processed by the controller 202.

As depicted, the memory 204 further stores a peer module 226 which comprises computer-readable programming instructions for implementing the peer engine 124, for example when processed by the controller 202.

While the modules 224, 226 are depicted as being separate from the application 206, in other examples one or more of the modules 224, 226 may be components of the application 206.

Furthermore, while not depicted, the memory 204 may comprise at least a portion of the memory 120 and/or the memory 204 may store, and/or temporarily store, the indications 122.

Turning to FIG. 3, certain components of an example client device 104 will be described. As depicted, a client device 104 includes at least one controller 302, such as one or more central processing units (CPUs) or the like. The controller 302 is interconnected with a memory 304 storing an application 306, and a communication interface 308. As depicted, the controller 302 is further interconnected with a visual rendering device 108 and one or more input devices 110 which may be internal or external (as depicted) to the client device 104. The controller 302, the memory 304 and the communication interface 308 are respectively substantially similar to the controller 202, the memory 204 and the communication interface 208 of the server 102, but adapted for the functionality of the client device 104.

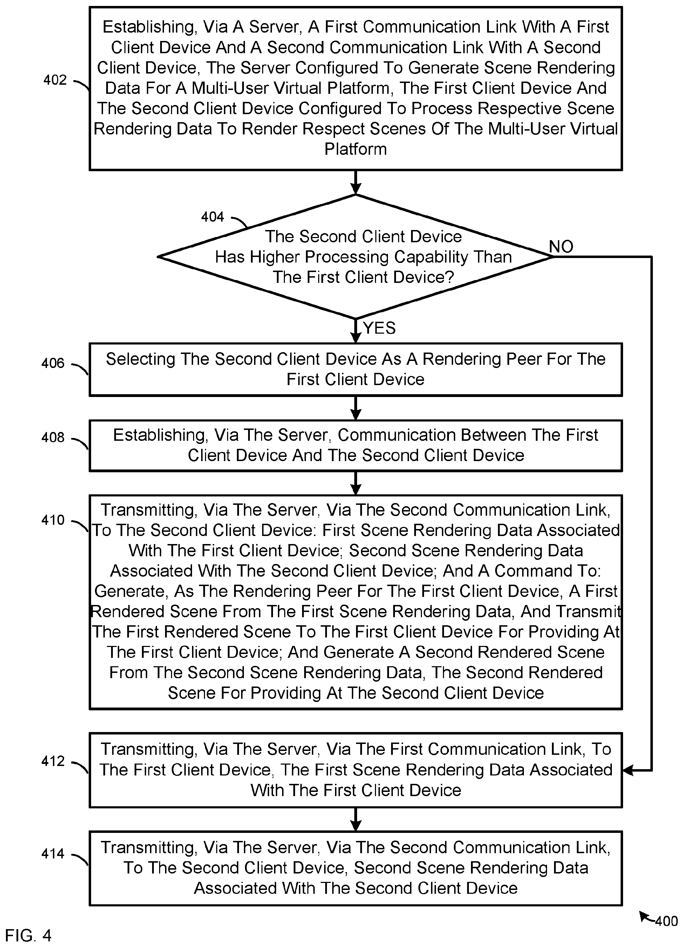

For example, the memory 304 stores computer-readable programming instructions, executable by the controller 302, in the form of various applications, including the application 306. As will be understood by those skilled in the art, the controller 302 executes the instructions of the application 306 (and any other suitable applications) in order to perform various actions defined by the instructions contained therein including, but not limited to, the blocks of a method described with respect to FIG. 4. In the description below, the controller 302, and more generally the client device 104, are said to be configured to perform those actions. It will be understood that they are so configured via the execution (by the controller 302) of the instructions of the applications stored in memory 304.

As depicted, the memory 304 further stores a rendering module 324 which comprises computer-readable programming instructions for implementing a rendering engine 106, for example when processed by the controller 302. While the rendering module 324 is depicted as being separate from the application 306, in other examples the rendering module may be a component of the application 306.

Attention is now directed to FIG. 4, which depicts a flowchart representative of a method 400 for distributed processing using a rendering peer. The operations of the method 400 of FIG. 4 correspond to machine readable instructions that are executed by the server 102, and specifically a controller 202 of the server 102. In the illustrated example, the instructions represented by the blocks of FIG. 4 are stored at the memory 204 for example, as the application 206 and/or the modules 224, 226. The method 400 of FIG. 4 is one way in which the controller 202 and/or the server 102 and/or the system 100 may be configured. Furthermore, the following discussion of the method 400 of FIG. 4 will lead to a further understanding of the system 100, and its various components.

The method 400 of FIG. 4 need not be performed in the exact sequence as shown and likewise various blocks may be performed in parallel rather than in sequence. Accordingly, the elements of method 400 are referred to herein as "blocks" rather than "steps." The method 400 of FIG. 4 may be implemented on variations of the system 100, as well.

At a block 402, the controller 202 and/or the server 102, establishes the first communication link 112-1 with the first client device 104-1 and the second communication link 112-2 with the second client device 104-2, the server 102 configured to generate scene rendering data 114 for a multi-user virtual platform, as has been previously described, the first client device 104-1 and the second client device 104-2 configured to process respective scene rendering data 114 to render respect scenes 118 of the multi-user virtual platform. For example, the communication links 112 may be established via the communication interface 208.

For example, the communication links 112 may be established when the client devices 104 log into the multi-user virtual platform, and/or may be established in any other suitable manner.

At a block 404, the controller 202 and/or the server 102 determines whether one of the client devices 104 has higher processing capability than another of the client devices 104.

For example, the controller 202 and/or the server 102, using the indications 122, may compares the processing capabilities of the client devices 104 to determine whether the second client 104-2 has higher processing capabilities than the first client device 104-1.

Such a comparison may occur via a comparing of the indications 122, for example retrieved from the memory 120, and the like. While herein the comparison is described programmatically (e.g., by comparing numbers of the indications 122), such a comparison may occur in any suitable manner including, but not limited to, using one or more machine learning algorithms.

In particular, the controller 202 and/or the server 102 may determine that, for a given resolution of 4K UHD, the first client device 104-1 has processing capabilities that enable a 5 fps frame rate, whereas the second client device 104-2 has processing capabilities that enable a 1600 fps frame rate. As such, the controller 202 and/or the server 102 determines that the second client 104-2 has higher processing capabilities than the first client device 104-1.

Hence, in present examples a "YES" decision occurs at the block 404.

However, the block 404 may include other comparisons.

For example, prior to determining whether the second client 104-2 has higher processing capabilities than the first client device 104-1, the controller 202 and/or the server 102 may determine whether the first client device 104-1 has processing capabilities below a first threshold processing capability, for example a first given minimum frame rate for generating images of a given resolution, such as 4K UHD. Such a first given minimum frame rate may comprise 24 fps. Hence, when the first client device 104-1 is only capable of generating images at a 4K UHD resolution at a frame rate of 5 fps, the controller 202 and/or the server 102 may determine that the first client device 104-1 has processing capabilities below the first threshold processing capability, and proceed to determine whether the second client 104-2 has higher processing capabilities than the first client device 104-1.

However, when the first client device 104-1 has processing capabilities at, or above, the first threshold processing capability, the determining of whether the second client 104-2 has higher processing capabilities than the first client device 104-1 may not occur, which may lead to a "NO" decision at the block 404, and the like.

Furthermore, the controller 202 and/or the server 102 may determine whether the second client device 104-2 has processing capabilities above a second threshold processing capability, for example a second given minimum frame rate for generating images of a given resolution, such as 4K UHD. Such a second given minimum frame rate may comprise 48 fps or at least double the first given minimum frame rate of the aforementioned first threshold processing capability to which the processing capabilities of the first client device 104-1 may be compared. Hence, when the second client device 104-2 is capable of generating images at a 4K UHD resolution at a frame rate of 1600 fps (e.g. and/or any other suitable frame rate), the controller 202 and/or the server 102 may determine that the second client device 104-2 has processing capabilities above the second threshold processing capability. Such a comparison may occur before or after, or in conjunction with, determining of whether the second client 104-2 has higher processing capabilities than the first client device 104-1. However, the second given minimum frame rate may comprise any suitable frame rate such as 100 fps, 200 fps, 1000 fps, amongst other possibilities, and may be set high enough such that, when the second client 104-2 is selected a rendering peer for the first client device 104-1, no latency in generating images for both rendered scenes 118 occurs at the second client device 104-2. Put another way, the second given minimum frame rate may be selected to ensure that the client device 104-2 has sufficient processing overhead to generate images for both rendered scenes 118 without other processes being implemented at the client device 104-2 being affected; such a second given minimum frame rate may be selected heuristically and/or may be selected using one or more machine learning algorithms.

Regardless, in some examples, when the second client device 104-1 has processing capabilities below the second threshold processing capability, the determining of whether the second client 104-2 has higher processing capabilities than the first client device 104-1 may not occur, which may lead to a "NO" decision at the block 404, and the like. However, in other examples, the determining of whether the second client 104-2 has higher processing capabilities than the first client device 104-1 may occur, which may lead to a "YES" decision at the block 404.

Put another way, in some examples, both client devices 104 may provide images for rendered scenes 118 of a same given resolution, such as 4K UHD, and a same given frame rate, such as 24 fps; in these examples, when the second client device 104-2 is to generate both sets of images for both rendered scenes 118, the second client device 104-2 may need processing capabilities that enable the second client device 104-2 to generate rendered scenes 118 of the same given resolution, but at twice the given frame rate, such as 48 fps, with 24 fps being for the first rendered scenes 118-1, and the other 24 fps being for the second rendered scenes 118-2. When the second client device 104-2 is not capable of generating rendered scenes 118 of the same given resolution for both the first client device 104-1 and the second client device 104-2, in some examples, the controller 202 and/or the server 102 may search for another client device 104 in the system 100 that has processing capability above the second threshold processing capability. For example, indications 122 of processing capability of more than two client devices 104 logged into the multi-user virtual platform may be stored at the memory 120, and the controller 202 and/or the server 102 may search the indications 122 accordingly for another client device 104 that has processing capability above the second threshold processing capability.

However, in other examples, when the second client device 104-2 has processing capabilities between the first threshold processing capability and the second threshold processing capability, the second client device 104-2 may be used to generate a portion of the rendered scenes 118-1 for the first client device 104-1 and provide the portion of the rendered scenes 118-1 to the first client device 104-1, and the first client device 104-1 may generate another portion of the rendered scenes 118-1. In some of these examples, one or more further client devices 104 with processing capabilities between the first threshold processing capability and the second threshold processing capability may generate yet a further portion of the rendered scenes 118-1 for the first client device 104-1 and provide the portion of the rendered scenes 118-1 to the first client device 104-1. However, in such a scheme, the first client device 104-1 may be generally enabled to generate a portion of the rendered scenes 118-1 and coordinate receiving other portions of the rendered scenes 118-1 from other client device 104. Hence, in general, the controller 202 and/or the server 102 may attempt to find only one other client device 104 that has processing capabilities to generate both sets of images for rendered scenes 118-1 for the first client device 104-1 as well its own rendered scenes 118. Nonetheless, distributed processing of rendered scenes 118 for one client device 104, amongst two or more other client devices 104 is within the scope of the present specification.

It is further understood that, rather than compare frame rates (e.g., numbers of images per second that each of the first client device 104-1 and the second client device 104-2 are capable of rendering), the controller 202 and/or the server 102 may compare respective speeds of respective processors of the first client device 104-1 and the second client device 104-2 to determine whether the second client 104-2 has higher processing capabilities than the first client device 104-1. For example, a processing speed of the first client device 104-1 may be 100 MHz (megahertz), while the second processing speed of the second client device 104-2 may be 10 GHz (gigahertz). Furthermore, such processing speeds may at least inherently indicate frame rates of the first client device 104-1 and the second client device 104-2 at given resolutions. As such, the aforementioned first threshold processing capability and second threshold processing capability may alternatively be provided as processing speeds.

However, the aforementioned first threshold processing capability and second threshold processing capability may be provided in any suitable format, including the aforementioned figures of merit.

Put another way, determining, via the controller 202 and/or the server 102, that the second client device 104-2 has higher processing capability than the first client device 104-1 may occur by comparing respective processing capabilities of the first client device 104-1 and the second client device 104-2, the respective processing capabilities comprising one or more of: respective numbers of images per second that each of the first client device 104-1 and the second client device 104-2 are capable of rendering (e.g., at a given resolution); and respective speeds of respective processors of the first client device 104-1 and the second client device 104-2. However, any suitable comparison of any suitable processing capabilities of the first client device 104-1 and the second client device 104-2 is within the scope of the present specification, including using the aforementioned figures of merit.

At a block 406, the controller 202 and/or the server 102, responsive to determining, that the second client device 104-2 has higher processing capability than the first client device 104-1 (e.g., a "YES" decision at the block 404), the controller 202 and/or the server 102 selects the second client device 104-2 as a rendering peer for the first client device 104-1.

At a block 408, the controller 202 and/or the server 102 establishes communication between the first client device 104-1 and the second client device 104-2.

For example, the controller 202 and/or the server 102 may transmit, to one or more of the first client device 104-1 and the second client device 104-2, connectivity information to establish a third communication link therebetween, such that communication between the first client device 104-1 and the second client device 104-2 occurs via the third communication link. Such connectivity information may include, but is not limited to, respective network addresses (e.g., Internet Protocol (IP) addresses) of the first client device 104-1 and the second client device 104-2, and/or any other suitable information that enables the first client device 104-1 and/or the second client device 104-2 to communicate via a third communication link, that is different from the communication links 112-1, 112-2.

Alternatively, and/or in addition, the controller 202 and/or the server 102 may establish communication between the first client device 104-1 and the second client device 104-2 via the server 102, which may act as an intermediary between the first client device 104-1 and the second client device 104-2. Put another way, establishing communication between the first client device 104-1 and the second client device 104-2 may occur via the server 102.

However, it is understood that establishing the aforementioned third communication link between the client devices 104 may have certain advantages over using the server 102 as an intermediary between the client devices 104. For example, establishing the aforementioned third communication link between the client devices 104 may involve less bandwidth, and less latency, as compared to using the server 102 as an intermediary between the client devices 104.

At a block 410, the controller 202 and/or the server 102 transmits, via the second communication link 112-2, to the second client device 104-2: first scene rendering data 114-1 associated with the first client device 104-1; second scene rendering data 114-2 associated with the second client device 104-2; and a command to control the second client device 104-2 to: generate, as the rendering peer for the first client device 104-1, a first rendered scene 118-1 from the first scene rendering data 114-1, and transmit the first rendered scene 118-1 to the first client device 104-1 for providing at the first client device 104-1; and generate a second rendered scene 118-2 from the second scene rendering data 114-2 , the second rendered scene 118-2 for providing at the second client device 104-2.

In some examples, the aforementioned command may comprise information indicating that the second client device 104-2 has been selected as a rendering peer for the first client device 104-1, and may be transmitted to the second client device 104-2 upon selection of the second client device 104-2 as the rendering peer for the first client device 104-1 at the block 406. In these examples, the command may comprise a command to control the second client device 104-2 to act as a rendering peer for the first client device 104-1, and may comprise the aforementioned connectivity information. Regardless, the command is understood to change the behavior of the second client device 104-2 to generate rendered scenes 118 for both the first client device 104-1 and the second client device 104-2, and transmit the first rendered scenes 118-1 associated with the first client device 104-1 to the first client device 104-1. Furthermore, the command generally informs the second client device 104-2 that the second client device 104-2 will be receiving the scene rendering data 114 for both the first client device 104-1 and the second client device 104-2.

In some examples, a command may also be provided to the first client device 104-1, to inform the first client device 104-1 that the second client device 104-2 has been selected as a rendering peer for the first client device 104-1, and hence, the first client device 104-1 may standby to receive the first rendered scenes 118-1 from the second client device 104-2. Such a command may also comprise the aforementioned connectivity information.

It is hence understood that the second rendering engine 106-2 may receive both the first scene rendering data 114-1 and the second scene rendering data 114-2 as input, and generate both the first rendered scenes 118-1 and the second rendered scenes 118-2 as output.

It is further understood that the second client device 104-2 is understood to transmit the first rendered scenes 118-1 to the first client device 104-1 (e.g., via a third communication link, or via the server 102), which receives the first rendered scenes 118-1, and provides the first rendered scenes 118-1 at the visual rendering device 108-1.

It is further understood that the first rendered scene(s) 118-1 and the second rendered scene(s) 118-2 may have about a same resolution, though there may be differences therebetween based on respective resolutions of the visual rendering devices 108. For example, the first visual rendering device 108-1 may have a lower resolution than the second visual rendering device 108-2, and hence the first rendered scene(s) 118-1 may be of lower resolution than the second rendered scene(s) 118-2. For example, the first rendered scene(s) 118-1 and the second rendered scene(s) 118-2 may be at about a respective maximum resolution of respective visual rendering devices 108 of the first client device 104-1 and the second client device 104-2.

Indeed, it is understood that respective resolutions associated with the aforementioned first threshold processing capability and the second threshold processing capability may be adjusted accordingly with regards to the resolutions of the respective maximum resolutions of the visual rendering devices 108. For example, the first threshold processing capability may comprise a given minimum frame rate (e.g., 24 fps) at a maximum resolution of the first visual rendering device 108-1, and the second threshold processing capability may comprise a given minimum frame rate for generating images at twice the given minimum frame rate (e.g., 48 fps) with one half of such images being at a maximum resolution of the first visual rendering device 108-1 and another half of such images being at a maximum resolution of the second visual rendering device 108-2.

Returning to the block 404, responsive to determining, that the second client device 104-2 does not have higher processing capability than the first client device 104-1 (e.g., a "NO" decision at the block 404), at a block 412, the controller 202 and/or the server 102 transmits, via the first communication link 112-1, to the first client device 104-1, the first scene rendering data 114-1 associated with the first client device 104-1.

Similarly, at a block 414, the controller 202 and/or the server 102 transmits, via the second communication link 112-2, to the second client device 104-2, the second scene rendering data 114-2 associated with the second client device 104-2.

Indeed, the block 412 and the block 414 represent the example of FIG. 1.

The method 400 may have other features.

For example, similar to the block 412 and the block 414, the method 400 may further comprise the controller 202 and/or the server 102, prior to communication between the first client device 104-1 and the second client device 104-2 being established, one or more of: transmitting the first scene rendering data 114-1 to the first client device 104-1 such that the first client device 104-1 generates the first rendered scene(s) 118-1; and transmitting the first scene rendering data 114-1 to the cloud rendering device 126 that generates the first rendered scene(s) 118-1 and provides the first rendered scene(s) 118-1 to the first client device 104-1. Again this scenario is depicted in FIG. 1.

Next, returning to the aforementioned threshold processing capabilities described with respect to the block 404, the method 400 may further comprise the controller 202 and/or the server 102: comparing a respective processing capability of the second client device 104-2 to a threshold processing capability (e.g., the second threshold processing capability); and responsive to determining that the respective processing capability of the second client device 104-2 is higher than the threshold processing capability, proceeding with selecting the second client device 104-2 as the rendering peer for the first client device 104-1 (e.g., a "YES" decision at the block 404, which results in the block 406 being implemented); and responsive to determining that the respective processing capability of the second client device 104-2 is less than the threshold processing capability, failing to proceed with selecting the second client device 104-2 as the rendering peer for the first client device 104-1 (e.g., a "NO" decision at the block 404, which results in the block 406 not being implemented); and one or more of: transmitting the first scene rendering data 114-1 to the first client device 104-1 such that the first client device 104-1 generates the first rendered scene(s) 118-1 (e.g., at the block 412); and transmitting the first scene rendering data 114-1 to the cloud rendering device 126 that generates the first rendered scene 118-1 and provides the first rendered scene 118-1 to the first client device 104-1.

Furthermore, the method 400 may include updates to the scene rendering data 114.

For example, the method 400 may further comprise the controller 202 and/or the server 102: after communication between the first client device 104-1 and the second client device 104-2 is established: receiving, at the server 102, via the first communication link 112-1, from the first client device 104-1, respective virtual location data 116-1 indicating one or more of a position and an orientation of a first virtual user (e.g., an avatar) in the multi-user virtual platform, the first virtual user associated with the first client device 104-1; updating, via the server 102, the first scene rendering data 114-1 based on the respective virtual location data 116-1; and transmitting, via the server 102, via the second communication link 112-2, to the second client device 104-2, the first scene rendering data 114-1, as updated, to cause the second client device 104-2 to generate, as the rendering peer for the first client device 104-1, an updated first rendered scene 118-1 and transmit the updated first rendered scene 118-1 to the first client device 104-1.

Such an aspect may further include: receiving, at the server 102, via the second communication link 112-2, from the second client device 104-2, respective virtual location data 116-2 indicating one or more of a position and an orientation of a second virtual user (e.g., an avatar) in the multi-user virtual platform, the second virtual user associated with the second client device 104-2; and updating, via the server 102, the first scene rendering data 114-1 based on the respective virtual location data 116-2 (e.g., as well as the respective virtual location data 116-1); and transmitting, via the server 102, via the second communication link 112-2, to the second client device 104-2, the first scene rendering data 114-1, as updated, to cause the second client device 104-2 to generate, as the rendering peer for the first client device 104-1, an updated first rendered scene 118-1 and transmit the updated first rendered scene 118-1 to the first client device 104-1.

Hence, it is understood that an updated first rendered scene 118-1 may be based on any changes to virtual location data 116 received from the first client device 104-1 and/or the second client device 104-2; however, when changes occur in only one set of virtual location data 116, an updated first rendered scene 118-1 may generated on the basis only on changed virtual location data 116.

Similarly, the method 400 may further comprise the controller 202 and/or the server 102: after communication between the first client device 104-1 and the second client device 104-2 is established: receiving, at the server 102, via the second communication link 112-2, from the second client device 104-2, respective virtual location data 116-2 indicating one or more of a position and an orientation of a second virtual user (e.g., an avatar) in the multi-user virtual platform, the second virtual user associated with the second client device 104-2; and updating, via the server 102, the second scene rendering data 114-2 based on the respective virtual location data 116-2; and transmitting, via the server 102, via the second communication link 112-2, to the second client device 104-2, the second scene rendering data 114-2, as updated, to cause the second client device 104-2 to generate an updated second rendered scene 118-2 for providing at the second client device 104-2.

Such an aspect may further include: receiving, at the server 102, via the first communication link 112-1, from the first client device 104-1, respective virtual location data 116-1 indicating one or more of a position and an orientation of a first virtual user (e.g., an avatar) in the multi-user virtual platform, the first virtual user associated with the first client device 104-1; updating, via the server 102, the second scene rendering data 114-2 based on the respective virtual location data 116-2 (e.g., as well as the respective virtual location data 116-1); and transmitting, via the server 102, via the second communication link 112-2, to the second client device 104-2, the second scene rendering data 114-2, as updated, to cause the second client device 104-2 to generate an updated second rendered scene 118-2 for providing at the second client device 104-2.

Hence, it is understood that an updated second rendered scene 118-2 may be based on any changes to virtual location data 116 received from the first client device 104-1 and/or the second client device 104-2; however, when changes occur in only one set of virtual location data 116, an updated second rendered scene 118-2 may generated on the basis only on changed virtual location data 116.

In some further aspects of the method 400, the controller 202 and/or the server 102 may partner the first client device 104-1 and the second client device 104-2 with each other on a basis of one or more of:

-A difference in respective processing capabilities between the first client device 104-1 and the second client device 104-2 being above a threshold difference. For example, the second client device 104-2 may have processing capabilities that enable the second client device 104-2 to generate images of the rendered scenes 118 for both the first client device 104-1 and the second client device 104-2, which may be indicated by a difference in respective frame rates between the client devices 104. For example, for a resolution of 4K UHD, when the frame rate of the first client device 104-1 is 5 fps, and a frame rate of at least 24 fps is preferred, a threshold difference in processing capabilities between the first client device 104-1 and the second client device 104-2 may be expressed in a number of frames per second of at least twice the frame rate of 24 fps, with the frame rate of the first client device 104-1 of 5 fps subtracted therefrom, such as 43 fps. Hence, in this scenario, the second client device 104-2 is understood to be capable of processing at least 19 fps, of 24 fps per second, of frames associated with the first client device 104-1, as well as its own frames. However, the threshold difference may alternatively be set to at least twice the frame rate of 24 fps, or twice any suitable minimum frame rate, such that the second client device 104-2 is understood to be capable of processing fames, at 24 fps per second, for both the first client device 104-1 and the second client device 104-2. When the respective processing capabilities of the first client device 104-1 and the second client device 104-2 are at or above the threshold difference, the first client device 104-1 and the second client device 104-2 may be partnered.

-Similarities between the first rendered scene(s) 118-1 and the second rendered scene(s) 118-2. For example, the second client device 104-2 may reduce processing when the first rendered scene(s) 118-1 and the second rendered scene(s) 118-2 are similar to each other (e.g., respective avatars associated with client devices 104 may be located in a same and/or similar part of the multi-user virtual platform), and the like, such that portions of the first rendered scene(s) 118-1 and the second rendered scene(s) 118-2 may be re-used and/or based off of each other. In these examples, determining that the first rendered scene(s) 118-1 and the second rendered scene(s) 118-2 are "similar" may occur via an image based comparison of the rendered scenes 118 such that the controller 202 and/or the server 102 determines whether threshold portions of the rendered scenes 118 are about the same (e.g., different views of a same room, for example from different angles); such threshold portions may be 50%, 60%, 70%, amongst other possibilities. When the threshold portions of the rendered scenes 118 occur, for example at least for a given period of time, such as 1 minute, 5 minutes, 10 minutes, amongst other possibilities, the first client device 104-1 and the second client device 104-2 may be partnered Alternatively, and/or in addition, the controller 202 and/or the server 102 may determine that the first rendered scene(s) 118-1 and the second rendered scene(s) 118-2 are similar to each other based on respective avatars associated with client devices 104 being within a threshold distance from each other within the multi-user virtual platform (e.g., 5 meters, 10 meters, 50 meters, amongst other possibilities, with such distances understood to be virtual distances within the multi-user virtual platform). When the distance is at or above the threshold distance, the first client device 104-1 and the second client device 104-2 may be partnered.

-A proximity of the first client device 104-1 and the second client device 104-2. For example, the first client device 104-1 and the second client device 104-2 may register their respective geographic locations at the server 102, and the controller 202 and/or the server 102 may compare the respective geographic locations to a threshold distance, such as 1 km, 2 kms, 5 kms, amongst other possibilities). When the distance is at or above the threshold distance, the first client device 104-1 and the second client device 104-2 may be partnered. In particular, the first client device 104-1 and the second client device 104-2 being within a threshold distance may reduce a possibility of latency in transmitting the first rendered scene(s) 118-1 from the second client device 104-2 to the first client device 104-1.

-Stability of a third communication link established between the first client device 104-1 and the second client device 104-2 over which the first client device 104-1 and the second client device 104-2 communicate. For example, the controller 202 and/or the server 102 may receive, from one or more of the client devices 104, via respective communication links 112, stability data of the third communication link, such as bit error ratio (BER), and the like, and compare the stability data to a threshold stability (e.g., such as a bit error ratio of 10⁻⁹, 10⁻¹⁰, amongst other possibilities) and, when the stability data is at or above the threshold stability (e.g., a BER is above 10⁻⁹), , the first client device 104-1 and the second client device 104-2 may be partnered.

However, any suitable partnering scheme is within the scope of the present specification.

Once partnered, whenever the first client device 104-1 and the second client device 104-2 are logged into the multi-user virtual platform at the same time, the controller 202 and/or the server 102 may automatically implement the blocks 408, 410, 412, for example without again implementing the blocks 404, 406. Put another way, once partnered, the first client device 104-1 and the second client device 104-2 are understood to be logically paired at the server 102 such that the second client device 104-2 automatically acts as a rendering peer for the first client device 104-1 in response to both the first client device 104-1 and the second client device 104-2 being logged into the multi-user virtual platform at the same time, and the like.

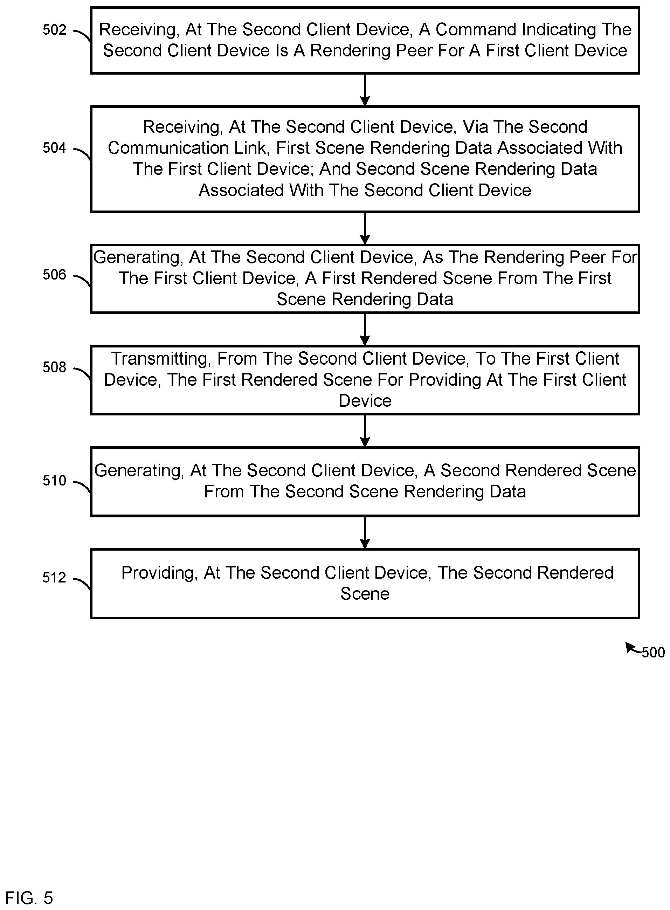

Attention is now directed to FIG. 5, which depicts a flowchart representative of another method 500 for distributed processing using a rendering peer. The operations of the method 500 of FIG. 5 correspond to machine readable instructions that are executed by the second client device 104-2, and specifically a controller 302 of the second client device 104-2. In the illustrated example, the instructions represented by the blocks of FIG. 5 are stored at the memory 304 for example, as the application 306 and/or the module 324. The method 500 of FIG. 5 is one way in which the controller 302 and/or the second client device 104-2 and/or the system 100 may be configured. Furthermore, the following discussion of the method 500 of FIG. 5 will lead to a further understanding of the system 100, and its various components.

The method 500 of FIG. 5 need not be performed in the exact sequence as shown and likewise various blocks may be performed in parallel rather than in sequence. Accordingly, the elements of method 500 are referred to herein as "blocks" rather than "steps." The method 500 of FIG. 5 may be implemented on variations of the system 100, as well.

Furthermore, the method 500 is understood to be complementary to the method 400, with the method 400 implemented by the server 102, and the method 500 implemented by the second client device 104-2 in response to certain blocks of the method 400 being implemented.

At a block 502, the controller 302 and/or the second client device 104-2, receives (e.g., from the server 102) a command indicating the second client device 104-2 is a rendering peer for the first client device 104-2. It is understood that the block 502 may be performed in conjunction with the block 410 and/or the block 408 and/or the block 406 of the method 400. Indeed, such a command may include the aforementioned connectivity information which enables the second client device 104-2 to establish a third communication link with the first client device 104-1.

Such a command may further cause the controller 302 and/or the second client device 104-2 to place the second rendering engine 106-2 into a mode where the second rendering engine 106-2 is configured to generate rendered scenes 118 for both client devices 104 as output, based on scene rendering data 114 for both client devices 104 as input.

At a block 504, the controller 302 and/or the second client device 104-2 receives (e.g., from the server 102), via the second communication link 112-2, the first scene rendering data 114-1 associated with the first client device 104-1; and the second scene rendering data 114-2 associated with the second client device 104-2.

At a block 506, the controller 302 and/or the second client device 104-2 generates (e.g., via the second rendering engine 106-2), as the rendering peer for the first client device 104-1, a first rendered scene (and/or scenes) 118-1 from the first scene rendering data 114-1.

At a block 508, the controller 302 and/or the second client device 104-2 transmits, to the first client device 104-1, the first rendered scene(s) 118-1 for providing at the first client device 104-1, for example at the first visual rendering device 108-1.

At a block 510, the controller 302 and/or the second client device 104-2 generates (e.g., via the second rendering engine 106-2), a second rendered scene (and/or scenes) 118-2 from the second scene rendering data 114-2.

At a block 512, the controller 302 and/or the second client device 104-2 provides, at the second client device 104-2, the second rendered scene(s) 118-2, for example at the second visual rendering device 108-2.

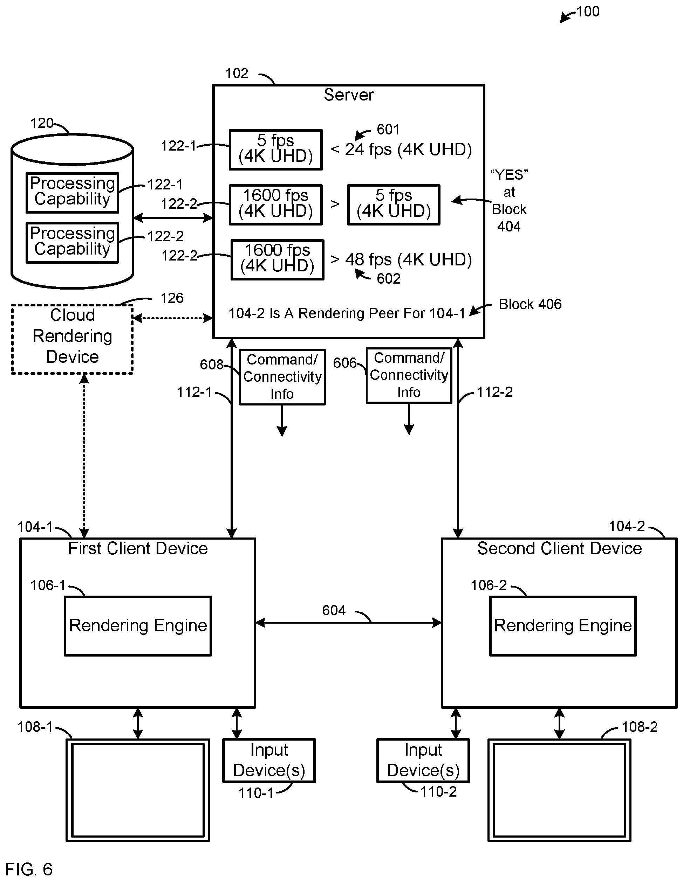

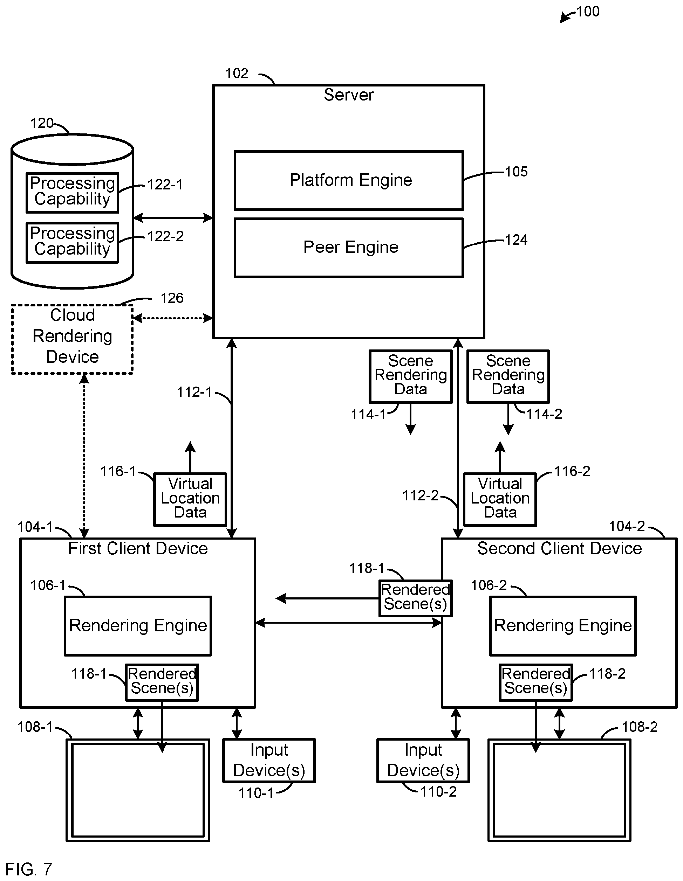

Attention is next directed to FIG. 6 and FIG. 7 which depict an example of the method 400 and the method 500. FIG. 6 and FIG. 7 are similar to FIG. 1, which like components having like numbers.

Attention is first directed to FIG. 6, which may follow, in time, the example of FIG. 1. Furthermore, in FIG. 6, it is understood that the communication links 112 have already been established (e.g., at the block 402 of the method 400). While for simplicity, while the engines 105, 124, the scene rendering data 114, the virtual location data 116 and the rendered scenes 118 are not depicted, at least the engines 105, 124 are nonetheless understood to be present. In particular, the scene rendering data 114, the virtual location data 116 and the rendered scenes 118 may be generated in FIG. 6, and exchanged similar to the example of FIG. 1, while at least the block 402 and the block 404 of the method 400 is being implemented. Alternatively, the method 400 may be implemented after the client devices 104 log into the multi-user virtual platform, and before the first client device 104-1 begins to provide respective virtual location data 116-1 to the server 102, and/or before an avatar associated with the first client device 104-1 "enters" the multi-user virtual platform. Hence, in other examples, the scene rendering data 114, the virtual location data 116 and the rendered scenes 118 may not initially be present.

As depicted, the server 102 is comparing the indication 122-1 of the first processing capability of the first client device 104-1 with the indication 122-2 of the second processing capability of the second client device 104-2 and determines (e.g., a "YES" decision at the block 404) that the indication 122-2 of the second processing capability of the second client device 104-2 is greater than the indication 122-1 of the first processing capability of the first client device 104-1. For example, as depicted, the indication 122-1 of the first processing capability of the first client device 104-1 is 5 fps for 4K UHD images, and the indication 122-2 of the second processing capability of the second client device 104-2 is 1600 fps for 4K UHD images.

While optional, as depicted, the server 102 further determines that the indication 122-1 of the first processing capability of the first client device 104-1, of 5 fps for 4K UHD images, is less than a first threshold processing capability 601, of 24 fps for 4K UHD images.

While also optional, as depicted, the server 102 further determines that the indication 122-2 of the second processing capability of the first client device 104-1, of 1600 fps for 4K UHD images, is greater than a second threshold processing capability 602, of 48 fps for 4K UHD images.

In some examples the determination that the indication 122-1 of the first processing capability of the first client device 104-1 is less than a first threshold processing capability 601 may occur before the comparison of the indications 122 of the processing capabilities of the client devices 104, and such a comparison may occur only when the indication 122-1 of the first processing capability of the first client device 104-1 is less than the first threshold processing capability 601.

However, the determination that the indication 122-2 of the second processing capability of the second client device 104-2 is greater than the second threshold processing capability 602 may occur before or after the comparison of the indications 122 of the processing capabilities of the client devices 104.

In this example, in response at least to the indication 122-2 of the second processing capability of the second client device 104-2 being greater than the indication 122-1 of the first processing capability of the first client device 104-1, the server 102 selects (e.g., at a block 406 of the method 400), the second client device 104-2 as a rendering peer for the first client device 104-1, and establishes (e.g., at the block 408 of the method 400) a third communication link 604 between the client devices 104.

In some examples, such a selection may only when the indication 122-2 of the second processing capability is greater than the indication 122-1 of the first processing capability, and the indication 122-1 of the first processing capability is less than the first threshold processing capability 601.

In further examples, such a selection may only when the indication 122-2 of the second processing capability is greater than the indication 122-1 of the first processing capability, and the indication 122-2 of the second processing capability is greater than the second threshold processing capability 602.

In yet further examples, such a selection may only when the indication 122-2 of the second processing capability is greater than the indication 122-1 of the first processing capability, the indication 122-1 of the first processing capability is less than the first threshold processing capability 601, and the indication 122-2 of the second processing capability is greater than the second threshold processing capability 602.

To establish the third communication link 604, as depicted, the server 102 may transmit, via the second communication link 112-2, to the second client device 104-2, a command 606 that includes connectivity information (e.g., a network address of the first client device 104-1) and which further indicates to the second client device 104-2 that the second client device 104-2 has been selected as rendering peer for the first client device 104-1. The second client device 104-2 receives (e.g., at a block 502 of the method 500) the command 606, and configures the second rendering engine 106-2 accordingly. For example, the second rendering engine 106-2 may enter a mode where the second rendering engine 106-2 will generate both sets of rendered scenes 118.

As depicted, server 102 may further transmit, via the first communication link 112-1, to the first client device 104-1, a command 608 that includes respective connectivity information (e.g., a network address of the second client device 104-1) and which further indicates to the first client device 104-1 that the second client device 104-2 has been selected as rendering peer for the first client device 104-1. The first client device 104-1 receives the command 608 and configures the first rendering engine 106-1 accordingly; for example, the first rendering engine 106-1 may be turned off, at least temporarily, and furthermore the first client device 104-1 may enter a mode where the first client device 104-1 will receive the first rendered scenes 118-1 from the second client device 104-2 rather than generate the first rendered scenes 118-1.

Attention is next directed to FIG. 7, which is understood to follow, in time, from FIG. 6. In FIG. 7, as the second client device 104-2 has been selected as a rendering peer for the first client device 104-1, the server 102 transmits (e.g., at the block 410 of the method 400) to the second client device 104-2, via the second communication link 112-2, the first scene rendering data 114-1 and the second scene rendering data 114-2. In some examples, the command 606 may be transmitted with the first scene rendering data 114-1 and the second scene rendering data 114-2.

The second client device 104-2 receives (e.g., at the block 504 of the method 500) the first scene rendering data 114-1 and the second scene rendering data 114-2.

The second client device 104-2 generates (e.g., at a block 506 of the method 500), for example via the second rendering engine 106-2), the first rendered scene (and/or scenes) 118-1 from the first scene rendering data 114-1.

The second client device 104-2 (e.g., at a block 508 of the method 500) transmits to the first client device 104-1, the first rendered scene(s) 118-1 for providing at the first client device 104-1, for example at the first visual rendering device 108-1. As depicted, the first client device 104-1 receives the first rendered scene(s) 118-1 and provides the first rendered scene(s) 118-1 to the first visual rendering device 108-1.

The second client device 104-2 generates (e.g., at a block 510 of the method 500), for example via the second rendering engine 106-2), the second rendered scene (and/or scenes) 118-2 from the second scene rendering data114-2.

The second client device 104-2 provides (e.g., at a block 512 of the method 500), the second rendered scene(s) 118-2, for example at the second visual rendering device 108-2.

As depicted, the client devices 104 further provide respective virtual location data 116 to the server 102 which updates the scene rendering data 114 accordingly.

As should by now be apparent, the operations and functions of the devices described herein are sufficiently complex as to require their implementation on a computer system, and cannot be performed, as a practical matter, in the human mind. In particular, computing devices, and the like, such as set forth herein are understood as requiring and providing speed and accuracy and complexity management that are not obtainable by human mental steps, in addition to the inherently digital nature of such operations (e.g., a human mind cannot synchronize databases, interface directly with, RAM or other digital storage, cannot transmit or receive electronic messages, among other features and functions set forth herein).

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XY, YZ, XZ, and the like). Similar logic can be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that in some examples, the functionality of devices and/or methods and/or processes described herein can be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein can be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A method comprising:
establishing, by a server (102), a first communication link with a first client device (104-1) and a second communication link with a second client device (104-2), the server (102) configured to generate scene rendering data for a multi-user virtual platform, the first client device (104-1) and the second client device (104-2) configured to process respective scene rendering data to render respective scenes of the multi-user virtual platform, which are displayed at respective visual rendering devices (108-1, 108-2) of the first client device (104-1) and the second client device (104-2);
obtaining, by the server (102), indications (122-1, 122-2) of processing capabilities of the first client device (104-1) and the second client device (104-2) provided by the first client device (104-1) and the second client device (104-2) at registration or login with the server (102);
partnering, by the server (102), the first client device (104-1) and the second client device with each other on a basis of a difference in respective processing capabilities between the first client device (104-1) and the second client device (104-2) being above a threshold difference;
responsive to determining, by the server (102) and based on the indications (122-1, 122-2), that the second client device has higher processing capability than the first client device (104-1), selecting the second client device (104-2) as a rendering peer for the first client device (104-1);
establishing, by the server (102), communication between the first client device (104-1) and the second client device (104-2); and
transmitting, by the server (102), via the second communication link, to the second client device (104-2): first scene rendering data associated with the first client device (104-1); second scene rendering data associated with the second client device (104-2); and a command to control the second client device (104-2) to:
generate, as the rendering peer for the first client device (104-1), a first rendered scene from the first scene rendering data, and transmit the first rendered scene to the first client device (104-1) for providing at the first client device (104-1); and
generate a second rendered scene from the second scene rendering data, the second rendered scene for providing at the second client device (104-2).

2. The method of claim 1, wherein establishing, by the server (102), communication between the first client device (104-1) and the second client device (104-2) comprises:
transmitting, by the server (102), to one or more of the first client device (104-1) and the second client device (104-2), connectivity information to establish a third communication link therebetween, such that communication between the first client device (104-1) and the second client device (104-2) occurs via the third communication link, or wherein establishing communication between the first client device (104-1) and the second client device (104-2) occurs via the server (102) as an intermediary between the first client device (104-1) and the second client device (104-2).

3. The method of claim 1, further comprising, after communication between the first client device (104-1) and the second client device (104-2) is established:
receiving, by the server (102), via the first communication link, from the first client device (104-1), respective virtual location data indicating one or more of a position and an orientation of a first virtual user in the multi-user virtual platform, the first virtual user associated with the first client device (104-1);
updating, by the server (102), the first scene rendering data based on the respective virtual location data; and
transmitting, by the server (102), via the second communication link, to the second client device (104-2), the first scene rendering data, as updated, to cause the second client device (104-2) to generate, as the rendering peer for the first client device (104-1), an updated first rendered scene and transmit the updated first rendered scene to the first client device (104-1).

4. The method of claim 1, further comprising, after communication between the first client device (104-1) and the second client device (104-2) is established:
receiving, at the server (102), via the second communication link, from the second client device (104-2), respective virtual location data indicating one or more of a position and an orientation of a second virtual user in the multi-user virtual platform, the second virtual user associated with the second client device (104-2);
updating, by the server (102), the second scene rendering data based on the respective virtual location data; and
transmitting, by the server (102), via the second communication link, to the second client device, the second scene rendering data, as updated, to cause the second client device (104-2) to generate an updated second rendered scene for providing at the second client device (104-2).

5. The method of claim 1, further comprising determining, by the server (102), that the second client device (104-2) has higher processing capability than the first client device (104-1) by:
comparing respective processing capabilities of the first client device (104-1) and the second client device (104-2), the respective processing capabilities comprising one or more of:
respective numbers of images per second that each of the first client device (104-1) and the second client device (104-2) are capable of rendering; and
respective speeds of respective processors of the first client device (104-1) and the second client device (104-2).

6. The method of claim 1, further comprising:
comparing, by the server (102), a respective processing capability of the second client device (104-2) to a threshold processing capability;
responsive to determining that the respective processing capability of the second client device (104-2) is higher than the threshold processing capability, proceeding, by the server (102), with selecting the second client device (104-2) as the rendering peer for the first client device (104-1); and
responsive to determining that the respective processing capability of the second client device (104-2) is less than the threshold processing capability, failing, by the server (102), to proceed with selecting the second client device (104-2) as the rendering peer for the first client device (104-1); and one of:
transmitting, by the server (102), the first scene rendering data to the first client device (104-1) such that the first client device (104-1) generates the first rendered scene; and
transmitting, by the server (102), the first scene rendering data to a cloud rendering device that generates the first rendered scene and provides the first rendered scene to the first client device (104-1).

7. The method of claim 1, further comprising, prior to communication between the first client device (104-1) and the second client device (104-2) being established, one or more of:
transmitting the first scene rendering data to the first client device (104-1) such that the first client device (104-1) generates the first rendered scene; and
transmitting the first scene rendering data to a cloud rendering device that generates the first rendered scene and provides the first rendered scene to the first client device (104-1).

8. The method of claim 1, wherein first rendered scene and the second rendered scene have about a same resolution, or
wherein first rendered scene and the second rendered scene are at about a respective maximum resolution of the respective visual rendering devices (108-1, 108-2) of the first client device (104-1) and the second client device (104-2).

9. The method of claim 1, wherein partnering the first client device (104-1) and the second client device (104-2) with each other is further performed on a basis of one or more of:
similarities between the first rendered scene and the second rendered scene;
a proximity of the first client device (104-1) and the second client device (104-2); and
stability of a third communication link established between the first client device (104-1) and the second client device (104-2) over which the first client device (104-1) and the second client device (104-2) communicate.

10. A server (102) comprising:
a communication interface; and a controller configured to:
establish, via the communication interface, a first communication link with a first client device (104-1) and a second communication link with a second client device (104-2), the server configured to generate scene rendering data for a multi-user virtual platform, the first client device (104-1) and the second client device (104-2) configured to process respective scene rendering data to render respective scenes of the multi-user virtual platform, which are displayed at respective visual rendering devices (108-1, 108-2) of the first client device (104-1) and the second client device (104-2);
obtain indications (122-1, 122-2) of processing capabilities of the first client device (104-1) and the second client device (104-2) provided by the first client device (104-1) and the second client device (104-2) at registration or login with the server (102);
partner the first client device (104-1) and the second client device with each other on a basis of a difference in respective processing capabilities between the first client device (104-1) and the second client device (104-2) being above a threshold difference;
responsive to determining based on the indications (122-1, 122-2) that the second client device (104-2) has higher processing capability than the first client device (104-1), select the second client device (104-2) as a rendering peer for the first client device (104-1);
establish communication between the first client device (104-1) and the second client device (104-2); and
transmit, via the communication interface, via the second communication link, to the second client device (104-2): first scene rendering data associated with the first client device (104-1); second scene rendering data associated with the second client device (104-2); and a command to control the second client device (104-2) to:
generate, as the rendering peer for the first client device (104-1), a first rendered scene from the first scene rendering data, and transmit the first rendered scene to the first client device (104-1) for providing at the first client device (104-1); and
generate a second rendered scene from the second scene rendering data, the second rendered scene for providing at the second client device (104-2).

11. The server (102) of claim 10, wherein the controller is further configured to establish communication between the first client device (104-1) and the second client device (104-2) by transmitting, via the communication interface, to one or more of the first client device (104-1) and the second client device (104-2), connectivity information to establish a third communication link therebetween, such that communication between the first client device (104-1) and the second client device (104-2) occurs via the third communication link, or
wherein the controller is further configured to establish communication between the first client device (104-1) and the second client device (104-2) using the server (102) as an intermediary between the first client device (104-1) and the second client device (104-2).

12. The server (102) of claim 10, wherein the controller is further configured to, after communication between the first client device (104-1) and the second client device (104-2) is established:
receive, via the first communication link, from the first client device (104-1), respective virtual location data indicating one or more of a position and an orientation of a first virtual user in the multi-user virtual platform, the first virtual user associated with the first client device (104-1);
update the first scene rendering data based on the respective virtual location data; and
transmit, via the second communication link, to the second client device (104-2), the first scene rendering data, as updated, to cause the second client device (104-2) to generate, as the rendering peer for the first client device (104-1), an updated first rendered scene and transmit the updated first rendered scene to the first client device (104-1).

13. The server (102) of claim 10, wherein the controller is further configured to, after communication between the first client device (104-1) and the second client device (104-2) is established:
receive, via the second communication link, from the second client device (104-2), respective virtual location data indicating one or more of a position and an orientation of a second virtual user in the multi-user virtual platform, the second virtual user associated with the second client device (104-2); and
update the second scene rendering data based on the respective virtual location data; and
transmit, via the second communication link, to the second client device (104-2), the second scene rendering data, as updated, to cause the second client device (104-2) to generate an updated second rendered scene for providing at the second client device (104-2).

14. The server (102) of claim 10, wherein the controller is further configured to determine, that the second client device (104-2) has higher processing capability than the first client device (104-1) by:
comparing respective processing capabilities of the first client device (104-1) and the second client device (104-2), the respective processing capabilities comprising one or more of: respective numbers of images per second that each of the first client device (104-1) and the second client device (104-2) are capable of rendering; and
respective speeds of respective processors of the first client device (104-1) and the second client device (104-2).

15. The server (102) of claim 10, further comprising:
comparing a respective processing capability of the second client device (104-2) to a threshold processing capability; and
responsive to determining that the respective processing capability of the second client device (104-2) is higher than the threshold processing capability, proceeding with selecting the second client device (104-2) as the rendering peer for the first client device (104-1); and
responsive to determining that the respective processing capability of the second client device (104-2) is less than the threshold processing capability, failing to proceed with selecting the second client device (104-2) as the rendering peer for the first client device (104-1); and one or more of:
transmitting the first scene rendering data to the first client device (104-1) such that the first client device (104-1) generates the first rendered scene; and
transmitting the first scene rendering data to a cloud rendering device that generates the first rendered scene and provides the first rendered scene to the first client device (104-1).

16. The server (102) of claim 10, further comprising, prior to communication between the first client device (104-1) and the second client device (104-2) being established, one or more of:
transmitting the first scene rendering data to the first client device (104-1) such that the first client device (104-1) generates the first rendered scene; and
transmitting the first scene rendering data to a cloud rendering device that generates the first rendered scene and provides the first rendered scene to the first client device (104-1).

17. The server (102) of claim 10, wherein first rendered scene and the second rendered scene have about a same resolution, or
wherein first rendered scene and the second rendered scene are at about a respective maximum resolution of the respective visual rendering devices (108-1, 108-2) of the first client device (104-1) and the second client device (104-2).

18. The server (102) of claim 10, wherein partnering the first client device (104-1) and the second client device (104-2) with each other is further performed on a basis of one or more of:
similarities between the first rendered scene and the second rendered scene;
a proximity of the first client device (104-1) and the second client device (104-2); and
stability of a third communication link established between the first client device (104-1) and the second client device (104-2) over which the first client device (104-1) and the second client device (104-2) communicate.

## Patentansprüche

1. Verfahren, das Folgendes umfasst:
Herstellen einer ersten Kommunikationsverbindung mit einem ersten Client-Gerät (104-1) und einer zweiten Kommunikationsverbindung mit einem zweiten Client-Gerät (104-2) durch einen Server (102), wobei der Server (102) so konfiguriert ist, dass er Szenen-Rendering-Daten für eine virtuelle Mehrbenutzerplattform generiert, und wobei das erste Client-Gerät (104-1) und das zweite Client-Gerät (104-2) so konfiguriert sind, dass sie die jeweiligen Szenen-Rendering-Daten verarbeiten, um die jeweiligen Szenen der virtuellen Mehrbenutzerplattform zu rendern, die auf den jeweiligen visuellen Rendering-Geräten (108-1, 108-2) des ersten Client-Geräts (104-1) und des zweiten Client-Geräts (104-2) angezeigt werden;
Erhalten von Angaben (122-1, 122-2) zu den Verarbeitungsfähigkeiten des ersten Client-Geräts (104-1) und des zweiten Client-Geräts (104-2) durch den Server (102), die vom ersten Client-Gerät (104-1) und vom zweiten Client-Gerät (104-2) bei der Registrierung oder Anmeldung beim Server (102) bereitgestellt werden;
Kopplung des ersten Client-Geräts (104-1) und des zweiten Client-Geräts (104-2) miteinander durch den Server (102) auf der Grundlage, dass eine Differenz der jeweiligen Verarbeitungsfähigkeit zwischen dem ersten Client-Gerät (104-1) und dem zweiten Client-Gerät (104-2) einen Schwellenwert überschreitet;
als Reaktion darauf, dass der Server (102) auf der Grundlage der Angaben (122-1, 122-2) feststellt, dass das zweite Client-Gerät eine höhere Verarbeitungsfähigkeit als das erste Client-Gerät (104-1) aufweist, Auswählen des zweiten Client-Geräts (104-2) als Rendering-Peer für das erste Client-Gerät (104-1);
Herstellen einer Kommunikation zwischen dem ersten Client-Gerät (104-1) und dem zweiten Client-Gerät (104-2) durch den Server (102); und
Übertragen folgender Daten durch den Server (102) über die zweite Kommunikationsverbindung an das zweite Client-Gerät (104-2): erste Szenen-Rendering-Daten, die dem ersten Client-Gerät (104-1) zugeordnet sind; zweite Szenen-Rendering-Daten, die dem zweiten Client-Gerät (104-2) zugeordnet sind; sowie einen Befehl zur Steuerung des zweiten Client-Geräts (104-2), um:
als Rendering-Peer für das erste Client-Gerät (104-1) eine erste gerenderte Szene aus den ersten Szenen-Rendering-Daten zu erzeugen und die erste gerenderte Szene an das erste Client-Gerät (104-1) zu übertragen, um sie auf dem ersten Client-Gerät (104-1) bereitzustellen; und
eine zweite gerenderte Szene aus den zweiten Szenen-Rendering-Daten zu erzeugen, wobei die zweite gerenderte Szene zur Bereitstellung auf dem zweiten Client-Gerät (104-2) bestimmt ist.

2. Verfahren nach Anspruch 1, wobei das Herstellen einer Kommunikation zwischen dem ersten Client-Gerät (104-1) und dem zweiten Client-Gerät (104-2) durch den Server (102) umfasst:
Übertragen von Verbindungsinformationen durch den Server (102) an eines oder mehrere von dem ersten Client-Gerät (104-1) und dem zweiten Client-Gerät (104-2), um eine dritte Kommunikationsverbindung zwischen diesen herzustellen, sodass die Kommunikation zwischen dem ersten Client-Gerät (104-1) und dem zweiten Client-Gerät (104-2) über die dritte Kommunikationsverbindung erfolgt, oder wobei die Herstellung der Kommunikation zwischen dem ersten Client-Gerät (104-1) und dem zweiten Client-Gerät (104-2) über den Server (102) als Vermittler zwischen dem ersten Client-Gerät (104-1) und dem zweiten Client-Gerät (104-2) erfolgt.

3. Verfahren nach Anspruch 1, das ferner umfasst, nachdem die Kommunikation zwischen dem ersten Client-Gerät (104-1) und dem zweiten Client-Gerät (104-2) hergestellt ist:
Empfangen durch den Server (102) über die erste Kommunikationsverbindung vom ersten Client-Gerät (104-1) entsprechender virtueller Standortdaten, die eine Position und/oder eine Ausrichtung eines ersten virtuellen Benutzers in der virtuellen Mehrbenutzerplattform angeben, wobei der erste virtuelle Benutzer dem ersten Client-Gerät (104-1) zugeordnet ist;
Aktualisieren der ersten Szenen-Rendering-Daten durch den Server (102) auf der Grundlage der jeweiligen virtuellen Standortdaten; und
Übertragen durch den Server (102) über die zweite Kommunikationsverbindung der aktualisierten ersten Szenen-Rendering-Daten an das zweite Client-Gerät (104-2), um zu bewirken, dass das zweite Client-Gerät (104-2) als Rendering-Peer für das erste Client-Gerät (104-1) eine aktualisierte erste gerenderte Szene erzeugt und die aktualisierte erste gerenderte Szene an das erste Client-Gerät (104-1) überträgt.

4. Verfahren nach Anspruch 1, das ferner umfasst, nachdem eine Kommunikation zwischen dem ersten Client-Gerät (104-1) und dem zweiten Client-Gerät (104-2) hergestellt wurde:
Empfangen am Server (102) über die zweite Kommunikationsverbindung von dem zweiten Client-Gerät (104-2) entsprechender virtueller Standortdaten, die eine Position und/oder eine Ausrichtung eines zweiten virtuellen Benutzers in der virtuellen Mehrbenutzerplattform angeben, wobei der zweite virtuelle Benutzer dem zweiten Client-Gerät (104-2) zugeordnet ist;
Aktualisieren der zweiten Szenen-Rendering-Daten durch den Server (102) auf der Grundlage der jeweiligen virtuellen Standortdaten; und
Übertragen durch den Server (102) über die zweite Kommunikationsverbindung der aktualisierten zweiten Szenen-Rendering-Daten an das zweite Client-Gerät, um zu bewirken, dass das zweite Client-Gerät (104-2) eine aktualisierte zweite gerenderte Szene zur Bereitstellung auf dem zweiten Client-Gerät (104-2) erzeugt.

5. Verfahren nach Anspruch 1, das ferner umfasst, dass der Server (102) feststellt, dass das zweite Client-Gerät (104-2) eine höhere Verarbeitungsfähigkeit als das erste Client-Gerät (104-1) aufweist mittels:
Vergleichen der jeweiligen Verarbeitungsfähigkeiten des ersten Client-Geräts (104-1) und des zweiten Client-Geräts (104-2), wobei die jeweiligen Verarbeitungsfähigkeiten eines oder mehrere der folgenden Merkmale umfassen:
die jeweilige Anzahl von Bildern pro Sekunde, die das erste Client-Gerät (104-1) und das zweite Client-Gerät (104-2) jeweils rendern können; und
die jeweiligen Geschwindigkeiten der jeweiligen Prozessoren des ersten Client-Geräts (104-1) und des zweiten Client-Geräts (104-2).

6. Verfahren nach Anspruch 1, das ferner umfasst:
Vergleichen einer jeweiligen Verarbeitungsfähigkeit des zweiten Client-Geräts (104-2) mit einer Schwellenverarbeitungsfähigkeit durch den Server (102);
als Reaktion auf die Feststellung, dass die jeweilige Verarbeitungsfähigkeit des zweiten Client-Geräts (104-2) höher ist als die Schwellenverarbeitungsfähigkeit, Fortfahren durch den Server (102) mit der Auswahl des zweiten Client-Geräts (104-2) als Rendering-Peer für das erste Client-Gerät (104-1); und
als Reaktion auf die Feststellung, dass die jeweilige Verarbeitungsfähigkeit des zweiten Client-Geräts (104-2) unter der Schwellenverarbeitungsfähigkeit liegt, Absehen durch den Server (102) davon, das zweite Client-Gerät (104-2) als Rendering-Peer für das erste Client-Gerät (104-1) auszuwählen; und eines oder mehrere der folgenden:
Übertragen der ersten Szenen-Rendering-Daten durch den Server (102) an das erste Client-Gerät (104-1), sodass das erste Client-Gerät (104-1) die erste gerenderte Szene erzeugt; und
Übertragen der ersten Szenen-Rendering-Daten durch den Server (102) an ein Cloud-Rendering-Gerät, das die erste gerenderte Szene erzeugt und die erste gerenderte Szene dem ersten Client-Gerät (104-1) bereitstellt.

7. Verfahren nach Anspruch 1, das ferner vor dem Aufbau der Kommunikation zwischen dem ersten Client-Gerät (104-1) und dem zweiten Client-Gerät (104-2) einen oder mehrere der folgenden Schritte umfasst:
Übertragen der ersten Szenen-Rendering-Daten an das erste Client-Gerät (104-1), sodass das erste Client-Gerät (104-1) die erste gerenderte Szene erzeugt; und
Übertragen der ersten Szenen-Rendering-Daten an ein Cloud-Rendering-Gerät, das die erste gerenderte Szene erzeugt und die erste gerenderte Szene an das erste Client-Gerät (104-1) bereitstellt.

8. Verfahren nach Anspruch 1, wobei die erste gerenderte Szene und die zweite gerenderte Szene etwa die gleiche Auflösung aufweisen, oder
wobei die erste gerenderte Szene und die zweite gerenderte Szene jeweils etwa die maximale Auflösung der jeweiligen visuellen Rendering-Geräte (108-1, 108-2) des ersten Client-Geräts (104-1) und des zweiten Client-Geräts (104-2) aufweisen.

9. Verfahren nach Anspruch 1, wobei die Kopplung des ersten Client-Geräts (104-1) und des zweiten Client-Geräts (104-2) miteinander ferner auf der Grundlage eines oder mehrerer der folgenden Merkmale erfolgt:
Ähnlichkeiten zwischen der ersten gerenderten Szene und der zweiten gerenderten Szene;
eine räumliche Nähe zwischen dem ersten Client-Gerät (104-1) und dem zweiten Client-Gerät (104-2); und
Stabilität einer dritten Kommunikationsverbindung, die zwischen dem ersten Client-Gerät (104-1) und dem zweiten Client-Gerät (104-2) hergestellt wurde und über die das erste Client-Gerät (104-1) und das zweite Client-Gerät (104-2) kommunizieren.

10. Server (102), der umfasst:
eine Kommunikationsschnittstelle; und eine Steuerung, die konfiguriert ist zum:
Herstellen, über die Kommunikationsschnittstelle, einer ersten Kommunikationsverbindung mit einem ersten Client-Gerät (104-1) und einer zweiten Kommunikationsverbindung mit einem zweiten Client-Gerät (104-2), wobei der Server (102) so konfiguriert ist, dass er Szenen-Rendering-Daten für eine virtuelle Mehrbenutzerplattform generiert, und wobei das erste Client-Gerät (104-1) und das zweite Client-Gerät (104-2) so konfiguriert sind, dass sie die jeweiligen Szenen-Rendering-Daten verarbeiten, um die jeweiligen Szenen der virtuellen Mehrbenutzerplattform zu rendern, die auf den jeweiligen visuellen Rendering-Geräten (108-1, 108-2) des ersten Client-Geräts (104-1) und des zweiten Client-Geräts (104-2) angezeigt werden;
Erhalten von Angaben (122-1, 122-2) zu den Verarbeitungsfähigkeiten des ersten Client-Geräts (104-1) und des zweiten Client-Geräts (104-2), die vom ersten Client-Gerät (104-1) und vom zweiten Client-Gerät (104-2) bei der Registrierung oder Anmeldung beim Server (102) bereitgestellt werden;
Kopplung des ersten Client-Geräts (104-1) und des zweiten Client-Geräts (104-2) miteinander auf der Grundlage, dass eine Differenz der jeweiligen Verarbeitungsfähigkeit zwischen dem ersten Client-Gerät (104-1) und dem zweiten Client-Gerät (104-2) einen Schwellenwert überschreitet;
als Reaktion darauf, dass auf der Grundlage der Angaben (122-1, 122-2) festgestellt wird, dass das zweite Client-Gerät eine höhere Verarbeitungsfähigkeit als das erste Client-Gerät (104-1) aufweist, Auswählen des zweiten Client-Geräts (104-2) als Rendering-Peer für das erste Client-Gerät (104-1);
Herstellen einer Kommunikation zwischen dem ersten Client-Gerät (104-1) und dem zweiten Client-Gerät (104-2); und
Übertragen folgender Daten über die Kommunikationsschnittstelle über die zweite Kommunikationsverbindung an das zweite Client-Gerät (104-2): erste Szenen-Rendering-Daten, die dem ersten Client-Gerät (104-1) zugeordnet sind; zweite Szenen-Rendering-Daten, die dem zweiten Client-Gerät (104-2) zugeordnet sind; sowie einen Befehl zur Steuerung des zweiten Client-Geräts (104-2), um:
als Rendering-Peer für das erste Client-Gerät (104-1) eine erste gerenderte Szene aus den ersten Szenen-Rendering-Daten zu erzeugen und die erste gerenderte Szene an das erste Client-Gerät (104-1) zu übertragen, um sie auf dem ersten Client-Gerät (104-1) bereitzustellen; und
eine zweite gerenderte Szene aus den zweiten Szenen-Rendering-Daten zu erzeugen, wobei die zweite gerenderte Szene zur Bereitstellung auf dem zweiten Client-Gerät (104-2) bestimmt ist.

11. Server (102) nach Anspruch 10, wobei die Steuerung ferner beim Herstellen einer Kommunikation zwischen dem ersten Client-Gerät (104-1) und dem zweiten Client-Gerät (104-2) konfiguriert ist zum Übertragen von Verbindungsinformationen über die Kommunikationsschnittstelle an eines oder mehrere von dem ersten Client-Gerät (104-1) und dem zweiten Client-Gerät (104-2), um eine dritte Kommunikationsverbindung zwischen diesen herzustellen, sodass die Kommunikation zwischen dem ersten Client-Gerät (104-1) und dem zweiten Client-Gerät (104-2) über die dritte Kommunikationsverbindung erfolgt, oder
wobei die Steuerung ferner konfiguriert ist zum Herstellen der Kommunikation zwischen dem ersten Client-Gerät (104-1) und dem zweiten Client-Gerät (104-2) unter Verwendung des Servers (102) als Vermittler zwischen dem ersten Client-Gerät (104-1) und dem zweiten Client-Gerät (104-2).

12. Server (102) nach Anspruch 10, wobei die Steuerung ferner, nachdem eine Kommunikation zwischen dem ersten Client-Gerät (104-1) und dem zweiten Client-Gerät (104-2) hergestellt wurde, konfiguriert ist zum:
Empfangen über die erste Kommunikationsverbindung vom ersten Client-Gerät (104-1) entsprechender virtueller Standortdaten, die eine Position und/oder eine Ausrichtung eines ersten virtuellen Benutzers in der virtuellen Mehrbenutzerplattform angeben, wobei der erste virtuelle Benutzer dem ersten Client-Gerät (104-1) zugeordnet ist;
Aktualisieren der ersten Szenen-Rendering-Daten auf der Grundlage der jeweiligen virtuellen Standortdaten; und
Übertragen über die zweite Kommunikationsverbindung der aktualisierten ersten Szenen-Rendering-Daten an das zweite Client-Gerät (104-2), um zu bewirken, dass das zweite Client-Gerät (104-2) als Rendering-Peer für das erste Client-Gerät (104-1) eine aktualisierte erste gerenderte Szene erzeugt und die aktualisierte erste gerenderte Szene an das erste Client-Gerät (104-1) überträgt.

13. Server (102) nach Anspruch 10, wobei die Steuerung ferner, nachdem eine Kommunikation zwischen dem ersten Client-Gerät (104-1) und dem zweiten Client-Gerät (104-2) hergestellt wurde, konfiguriert ist zum:
Empfangen über die zweite Kommunikationsverbindung von dem zweiten Client-Gerät (104-2) entsprechender virtueller Standortdaten, die eine Position und/oder eine Ausrichtung eines zweiten virtuellen Benutzers in der virtuellen Mehrbenutzerplattform angeben, wobei der zweite virtuelle Benutzer dem zweiten Client-Gerät (104-2) zugeordnet ist;
Aktualisieren der zweiten Szenen-Rendering-Daten auf der Grundlage der jeweiligen virtuellen Standortdaten; und
Übertragen über die zweite Kommunikationsverbindung der aktualisierten zweiten Szenen-Rendering-Daten an das zweite Client-Gerät, um zu bewirken, dass das zweite Client-Gerät (104-2) eine aktualisierte zweite gerenderte Szene zur Bereitstellung auf dem zweiten Client-Gerät (104-2) erzeugt.

14. Server (102) nach Anspruch 10, wobei die Steuerung ferner konfiguriert ist zum Feststellen, dass das zweite Client-Gerät (104-2) eine höhere Verarbeitungsfähigkeit als das erste Client-Gerät (104-1) aufweist, mittels:
Vergleichen der jeweiligen Verarbeitungsfähigkeiten des ersten Client-Geräts (104-1) und des zweiten Client-Geräts (104-2), wobei die jeweiligen Verarbeitungsfähigkeiten eines oder mehrere der folgenden Merkmale umfassen:
die jeweilige Anzahl von Bildern pro Sekunde, die das erste Client-Gerät (104-1) und das zweite Client-Gerät (104-2) jeweils rendern können; und
die jeweiligen Geschwindigkeiten der jeweiligen Prozessoren des ersten Client-Geräts (104-1) und des zweiten Client-Geräts (104-2).

15. Server (102) nach Anspruch 10, der ferner umfasst:
Vergleichen einer jeweiligen Verarbeitungsfähigkeit des zweiten Client-Geräts (104-2) mit einer Schwellenverarbeitungsfähigkeit;
als Reaktion auf die Feststellung, dass die jeweilige Verarbeitungsfähigkeit des zweiten Client-Geräts (104-2) höher ist als die Schwellenverarbeitungsfähigkeit, Fortfahren mit der Auswahl des zweiten Client-Geräts (104-2) als Rendering-Peer für das erste Client-Gerät (104-1); und
als Reaktion auf die Feststellung, dass die jeweilige Verarbeitungsfähigkeit des zweiten Client-Geräts (104-2) unter der Schwellenverarbeitungsfähigkeit liegt, Absehen davon, das zweite Client-Gerät (104-2) als Rendering-Peer für das erste Client-Gerät (104-1) auszuwählen; und eines oder mehrere der folgenden:
Übertragen der ersten Szenen-Rendering-Daten an das erste Client-Gerät (104-1), sodass das erste Client-Gerät (104-1) die erste gerenderte Szene erzeugt; und
Übertragen der ersten Szenen-Rendering-Daten an ein Cloud-Rendering-Gerät, das die erste gerenderte Szene erzeugt und die erste gerenderte Szene dem ersten Client-Gerät (104-1) bereitstellt.

16. Server (102) nach Anspruch 10, der ferner vor dem Aufbau der Kommunikation zwischen dem ersten Client-Gerät (104-1) und dem zweiten Client-Gerät (104-2) einen oder mehrere der folgenden Schritte umfasst:
Übertragen der ersten Szenen-Rendering-Daten an das erste Client-Gerät (104-1), sodass das erste Client-Gerät (104-1) die erste gerenderte Szene erzeugt; und
Übertragen der ersten Szenen-Rendering-Daten an ein Cloud-Rendering-Gerät, das die erste gerenderte Szene erzeugt und die erste gerenderte Szene an das erste Client-Gerät (104-1) bereitstellt.

17. Server (102) nach Anspruch 10, wobei die erste gerenderte Szene und die zweite gerenderte Szene etwa die gleiche Auflösung aufweisen, oder
wobei die erste gerenderte Szene und die zweite gerenderte Szene jeweils etwa die maximale Auflösung der jeweiligen visuellen Rendering-Geräte (108-1, 108-2) des ersten Client-Geräts (104-1) und des zweiten Client-Geräts (104-2) aufweisen.

18. Server (102) nach Anspruch 10, wobei die Kopplung des ersten Client-Geräts (104-1) und des zweiten Client-Geräts (104-2) miteinander ferner auf der Grundlage eines oder mehrerer der folgenden Merkmale erfolgt:
Ähnlichkeiten zwischen der ersten gerenderten Szene und der zweiten gerenderten Szene;
eine räumliche Nähe zwischen dem ersten Client-Gerät (104-1) und dem zweiten Client-Gerät (104-2); und
Stabilität einer dritten Kommunikationsverbindung, die zwischen dem ersten Client-Gerät (104-1) und dem zweiten Client-Gerät (104-2) hergestellt wurde und über die das erste Client-Gerät (104-1) und das zweite Client-Gerät (104-2) kommunizieren.

## Revendications

1. Méthode comprenant :
l'établissement, par un serveur (102), d'une première liaison de communication avec un premier dispositif client (104-1) et une deuxième liaison de communication avec un second dispositif client (104-2), le serveur (102) étant configuré pour générer des données de rendu de scène pour une plateforme virtuelle multi-utilisateurs, le premier dispositif client (104-1) et le second dispositif client (104-2) étant configurés pour traiter respectivement les données de rendu de scène afin de rendre respectivement des scènes de la plateforme virtuelle multi-utilisateurs, qui sont affichées sur des dispositifs de rendu visuel respectifs (108-1, 108-2) du premier dispositif client (104-1) et du second dispositif client (104-2) ;
l'obtention, par le serveur (102), d'indications (122-1, 122-2) des capacités de traitement du premier dispositif client (104-1) et du second dispositif client (104-2) fournies par le premier dispositif client (104-1) et le second dispositif client (104-2) lors de l'enregistrement ou de la connexion au serveur (102) ;
l'association, par le serveur (102), du premier dispositif client (104-1) et du second dispositif client l'un avec l'autre sur la base d'une différence de capacités de traitement respectives entre le premier dispositif client (104-1) et le second dispositif client (104-2) qui est supérieure à un seuil de différence ;
en réponse à la détermination, par le serveur (102) et sur la base des indications (122-1, 122-2), que le second dispositif client a une capacité de traitement supérieure à celle du premier dispositif client (104-1), la sélection du second dispositif client (104-2) comme pair de rendu pour le premier dispositif client (104-1) ;
l'établissement, par le serveur (102), d'une communication entre le premier dispositif client (104-1) et le second dispositif client (104-2) ; et
la transmission, par le serveur (102), via la deuxième liaison de communication, au second dispositif client (104-2) : de premières données de rendu de scène associées au premier dispositif client (104-1) ; de secondes données de rendu de scène associées au second dispositif client (104-2) ; et
d'une commande pour commander le second dispositif client (104-2) pour :
générer, en tant que pair de rendu pour le premier dispositif client (104-1), une première scène rendue à partir des premières données de rendu de scène, et transmettre la première scène rendue au premier dispositif client (104-1) pour la fourniture au niveau du premier dispositif client (104-1) ; et
générer une seconde scène rendue à partir des secondes données de rendu de scène, la seconde scène rendue étant pour la fourniture au niveau du second dispositif client (104-2).

2. Méthode selon la revendication 1, dans laquelle l'établissement, par le serveur (102), d'une communication entre le premier dispositif client (104-1) et le second dispositif client (104-2) comprend :
la transmission, par le serveur (102), à un ou plusieurs parmi le premier dispositif client (104-1) et le second dispositif client (104-2), d'informations de connectivité pour établir une troisième liaison de communication entre eux, de sorte que la communication entre le premier dispositif client (104-1) et le second dispositif client (104-2) s'effectue via la troisième liaison de communication, ou dans laquelle l'établissement d'une communication entre le premier dispositif client (104-1) et le second dispositif client (104-2) s'effectue via le serveur (102) en tant qu'intermédiaire entre le premier dispositif client (104-1) et le second dispositif client (104-2).

3. Méthode selon la revendication 1, comprenant en outre, après que la communication entre le premier dispositif client (104-1) et le second dispositif client (104-2) est établie :
la réception, par le serveur (102), via la première liaison de communication, à partir du premier dispositif client (104-1), de données de localisation virtuelle respectives indiquant une ou plusieurs parmi une position et une orientation d'un premier utilisateur virtuel dans la plateforme virtuelle multi-utilisateurs, le premier utilisateur virtuel étant associé au premier dispositif client (104-1) ;
la mise à jour, par le serveur (102), des premières données de rendu de scène sur la base des données de localisation virtuelle respectives ; et
la transmission, par le serveur (102), via la deuxième liaison de communication, au second dispositif client (104-2), des premières données de rendu de scène, telles que mises à jour, pour amener le second dispositif client (104-2) à générer, en tant que pair de rendu pour le premier dispositif client (104-1), une première scène rendue mise à jour et transmettre la première scène rendue mise à jour au premier dispositif client (104-1).

4. Méthode selon la revendication 1, comprenant en outre, après que la communication entre le premier dispositif client (104-1) et le second dispositif client (104-2) est établie :
la réception, au niveau du serveur (102), via la deuxième liaison de communication, à partir du second dispositif client (104-2), de données de localisation virtuelle respectives indiquant une ou plusieurs parmi une position et une orientation d'un second utilisateur virtuel sur la plateforme virtuelle multi-utilisateurs, le second utilisateur virtuel étant associé au second dispositif client (104-2) ;
la mise à jour, par le serveur (102), des secondes données de rendu de scène sur la base des données de localisation virtuelle respectives ; et
la transmission, par le serveur (102), via la deuxième liaison de communication, au second dispositif client, des secondes données de rendu de scène, telles que mises à jour, pour amener le second dispositif client (104-2) à générer une seconde scène rendue mise à jour pour la fourniture au second dispositif client (104-2).

5. Méthode selon la revendication 1, comprenant en outre la détermination, par le serveur (102), que le second dispositif client (104-2) a une capacité de traitement supérieure à celle du premier dispositif client (104-1) par :
la comparaison des capacités de traitement respectives du premier dispositif client (104-1) et du second dispositif client (104-2), les capacités de traitement respectives comprenant un ou plusieurs parmi :
des nombres respectifs d'images par seconde que chacun du premier dispositif client (104-1) et du second dispositif client (104-2) est capable de rendre ; et
des vitesses respectives de processeurs respectifs du premier dispositif client (104-1) et du second dispositif client (104-2).

6. Méthode selon la revendication 1, comprenant en outre :
la comparaison, par le serveur (102), d'une capacité de traitement respective du second dispositif client (104-2) à une capacité de traitement seuil ;
en réponse à la détermination que la capacité de traitement respective du second dispositif client (104-2) est supérieure à la capacité de traitement seuil, la poursuite, par le serveur (102), avec la sélection du second dispositif client (104-2) en tant que pair de rendu pour le premier dispositif client (104-1) ; et
en réponse à la détermination que la capacité de traitement respective du second dispositif client (104-2) est inférieure à la capacité de traitement seuil, l'omission, par le serveur (102), de poursuivre avec la sélection du second dispositif client (104-2) en tant que pair de rendu pour le premier dispositif client (104-1) ; et l'une parmi :
la transmission, par le serveur (102), des premières données de rendu de scène au premier dispositif client (104-1) de sorte que le premier dispositif client (104-1) génère la première scène rendue ; et
la transmission, par le serveur (102), des premières données de rendu de scène à un dispositif de rendu en nuage qui génère la première scène rendue et fournit la première scène rendue au premier dispositif client (104-1).

7. Méthode selon la revendication 1, comprenant en outre, avant que la communication entre le premier dispositif client (104-1) et le second dispositif client (104-2) ne soit établie, une ou plusieurs parmi :
la transmission des premières données de rendu de scène au premier dispositif client (104-1) de sorte que le premier dispositif client (104-1) génère la première scène rendue ; et
la transmission des premières données de rendu de scène à un dispositif de rendu en nuage qui génère la première scène rendue et fournit la première scène rendue au premier dispositif client (104-1).

8. Méthode selon la revendication 1, dans laquelle la première scène rendue et la seconde scène rendue ont environ la même résolution, ou
dans laquelle la première scène rendue et la seconde scène rendue sont à environ une résolution maximale respective des dispositifs de rendu visuel respectifs (108-1, 108-2) du premier dispositif client (104-1) et du second dispositif client (104-2).

9. Méthode selon la revendication 1, dans laquelle l'association du premier dispositif client (104-1) et du second dispositif client (104-2) l'un avec l'autre est en outre réalisée sur la base d'une ou plusieurs parmi :
des similarités entre la première scène rendue et la seconde scène rendue ;
une proximité du premier dispositif client (104-1) et du second dispositif client (104-2) ; et
une stabilité d'une troisième liaison de communication établie entre le premier dispositif client (104-1) et le second dispositif client (104-2) sur laquelle le premier dispositif client (104-1) et le second dispositif client (104-2) communiquent.

10. Serveur (102) comprenant :
une interface de communication ; et un dispositif de commande configuré pour :
établir, via l'interface de communication, une première liaison de communication avec un premier dispositif client (104-1) et une deuxième liaison de communication avec un second dispositif client (104-2), le serveur étant configuré pour générer des données de rendu de scène pour une plateforme virtuelle multi-utilisateurs, le premier dispositif client (104-1) et le second dispositif client (104-2) étant configurés pour traiter respectivement les données de rendu de scène afin de rendre respectivement des scènes de la plateforme virtuelle multi-utilisateurs, qui sont affichées sur des dispositifs de rendu visuel respectifs (108-1, 108-2) du premier dispositif client (104-1) et du second dispositif client (104-2) ;
obtenir des indications (122-1, 122-2) de capacités de traitement du premier dispositif client (104-1) et du second dispositif client (104-2) fournies par le premier dispositif client (104-1) et le second dispositif client (104-2) lors de l'enregistrement ou de la connexion au serveur (102) ;
associer le premier dispositif client (104-1) et le second dispositif client l'un avec l'autre sur la base d'une différence de capacités de traitement respectives entre le premier dispositif client (104-1) et le second dispositif client (104-2) qui est supérieure à un seuil de différence ;
en réponse à la détermination, sur la base des indications (122-1, 122-2), que le second dispositif client (104-2) a une capacité de traitement supérieure à celle du premier dispositif client (104-1), sélectionner le second dispositif client (104-2) comme pair de rendu pour le premier dispositif client (104-1) ;
établir une communication entre le premier dispositif client (104-1) et le second dispositif client (104-2) ; et
transmettre, via l'interface de communication, via la deuxième liaison de communication, au second dispositif client (104-2) : des premières données de rendu de scène associées au premier dispositif client (104-1) ; des secondes données de rendu de scène associées au second dispositif client (104-2) ; et une commande pour commander le second dispositif client (104-2) pour :
générer, en tant que pair de rendu pour le premier dispositif client (104-1), une première scène rendue à partir des premières données de rendu de scène, et transmettre la première scène rendue au premier dispositif client (104-1) pour la fourniture au niveau du premier dispositif client (104-1) ; et
générer une seconde scène rendue à partir des secondes données de rendu de scène, la seconde scène rendue étant pour la fourniture au niveau du second dispositif client (104-2).

11. Serveur (102) selon la revendication 10, dans lequel le dispositif de commande est en outre configuré pour établir une communication entre le premier dispositif client (104-1) et le second dispositif client (104-2) en transmettant, via l'interface de communication, à un ou plusieurs parmi le premier dispositif client (104-1) et le second dispositif client (104-2), des informations de connectivité pour établir une troisième liaison de communication entre eux, de sorte que la communication entre le premier dispositif client (104-1) et le second dispositif client (104-2) s'effectue via la troisième liaison de communication, ou
dans lequel le dispositif de commande est en outre configuré pour établir la communication entre le premier dispositif client (104-1) et le second dispositif client (104-2) en utilisant le serveur (102) en tant qu'intermédiaire entre le premier dispositif client (104-1) et le second dispositif client (104-2).

12. Serveur (102) selon la revendication 10, dans lequel le dispositif de commande est en outre configuré pour, après que la communication entre le premier dispositif client (104-1) et le second dispositif client (104-2) est établie :
recevoir, via la première liaison de communication, à partir du premier dispositif client (104-1), des données de localisation virtuelle respectives indiquant une ou plusieurs parmi une position et une orientation d'un premier utilisateur virtuel dans la plateforme virtuelle multi-utilisateurs, le premier utilisateur virtuel étant associé au premier dispositif client (104-1) ;
mettre à jour les premières données de rendu de scène sur la base des données de localisation virtuelle respectives ; et
transmettre, via la deuxième liaison de communication, au second dispositif client (104-2), les premières données de rendu de scène, telles que mises à jour, pour amener le second dispositif client (104-2) à générer, en tant que pair de rendu pour le premier dispositif client (104-1), une première scène rendue mise à jour et transmettre la première scène rendue mise à jour au premier dispositif client (104-1).

13. Serveur (102) selon la revendication 10, dans lequel le dispositif de commande est en outre configuré pour, après que la communication entre le premier dispositif client (104-1) et le second dispositif client (104-2) est établie :
recevoir, via la deuxième liaison de communication, à partir du second dispositif client (104-2), des données de localisation virtuelle respectives indiquant une ou plusieurs parmi une position et une orientation d'un second utilisateur virtuel sur la plateforme virtuelle multi-utilisateurs, le second utilisateur virtuel étant associé au second dispositif client (104-2) ; et
mettre à jour les secondes données de rendu de scène sur la base des données de localisation virtuelle respectives ; et
transmettre, via la deuxième liaison de communication, au second dispositif client (104-2), les secondes données de rendu de scène, telles que mises à jour, pour amener le second dispositif client (104-2) à générer une seconde scène rendue mise à jour pour la fourniture au second dispositif client (104-2).

14. Serveur (102) selon la revendication 10, dans lequel le dispositif de commande est en outre configuré pour déterminer que le second dispositif client (104-2) a une capacité de traitement supérieure à celle du premier dispositif client (104-1) par :
la comparaison des capacités de traitement respectives du premier dispositif client (104-1) et du second dispositif client (104-2), les capacités de traitement respectives comprenant un ou plusieurs parmi : des nombres respectifs d'images par seconde que chacun du premier dispositif client (104-1) et du second dispositif client (104-2) est capable de rendre ; et
des vitesses respectives de processeurs respectifs du premier dispositif client (104-1) et du second dispositif client (104-2).

15. Serveur (102) selon la revendication 10, comprenant en outre :
la comparaison d'une capacité de traitement respective du second dispositif client (104-2) à une capacité de traitement seuil ; et
en réponse à la détermination que la capacité de traitement respective du second dispositif client (104-2) est supérieure à la capacité de traitement seuil, la poursuite avec la sélection du second dispositif client (104-2) en tant que pair de rendu pour le premier dispositif client (104-1) ; et
en réponse à la détermination que la capacité de traitement respective du second dispositif client (104-2) est inférieure à la capacité de traitement seuil, l'omission de poursuivre avec la sélection du second dispositif client (104-2) en tant que pair de rendu pour le premier dispositif client (104-1) ; et l'une ou plusieurs parmi :
la transmission des premières données de rendu de scène au premier dispositif client (104-1) de sorte que le premier dispositif client (104-1) génère la première scène rendue ; et
la transmission des premières données de rendu de scène à un dispositif de rendu en nuage qui génère la première scène rendue et fournit la première scène rendue au premier dispositif client (104-1).

16. Serveur (102) selon la revendication 10, comprenant en outre, avant que la communication entre le premier dispositif client (104-1) et le second dispositif client (104-2) ne soit établie, une ou plusieurs parmi :
la transmission des premières données de rendu de scène au premier dispositif client (104-1) de sorte que le premier dispositif client (104-1) génère la première scène rendue ; et
la transmission des premières données de rendu de scène à un dispositif de rendu en nuage qui génère la première scène rendue et fournit la première scène rendue au premier dispositif client (104-1).

17. Serveur (102) selon la revendication 10, dans lequel la première scène rendue et la seconde scène rendue ont environ la même résolution, ou
dans lequel la première scène rendue et la seconde scène rendue sont à environ une résolution maximale respective des dispositifs de rendu visuel respectifs (108-1, 108-2) du premier dispositif client (104-1) et du second dispositif client (104-2).

18. Serveur (102) selon la revendication 10, dans lequel l'association du premier dispositif client (104-1) et du second dispositif client (104-2) l'un avec l'autre est en outre réalisée sur la base d'une ou plusieurs parmi :
des similarités entre la première scène rendue et la seconde scène rendue ;
une proximité du premier dispositif client (104-1) et du second dispositif client (104-2) ; et
une stabilité d'une troisième liaison de communication établie entre le premier dispositif client (104-1) et le second dispositif client (104-2) sur laquelle le premier dispositif client (104-1) et le second dispositif client (104-2) communiquent.
